# EUROPEAN PATENT APPLICATION

(11) **EP 4 507 363 A1**
(43) Date of publication of application: **12.02.2025**
(21) Application number: 23778382.4
(22) Date of filing: 30.03.2023
(51) Int. Cl.: H04W 24/02

(54) **DISCONTINUOUS RECEPTION CONFIGURATION METHOD AND DEVICE FOR DIRECT COMMUNICATION INTERFACE IN RELAY SCENARIO**

(30) Priority: 01.04.2022 CN 202210347757
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2023/085112
(87) International publication number: WO 2023/186017

(57) **Abstract**

A method for configuring discontinuous reception of a direct communication interface in a relay scenario and a device thereof are provided. The method of the present disclosure includes: a remote terminal receiving a first end-to-end Radio Resource Control (RRC) signaling sent by a network device, where the first end-to-end RRC signaling carries at least one of the following: first discontinuous reception (DRX) configuration information, where the first DRX configuration information is configured to configure a DRX used on the direct communication interface when the remote terminal serves as a transmitting terminal; second DRX configuration information, where the second DRX configuration information is configured to configure a DRX used on the direct communication interface when the remote terminal serves as a receiving terminal; where the remote terminal accesses the network device through a relay terminal, and the direct communication interface is a direct communication interface between the remote terminal and the relay terminal.

## Description

### CROSS REFERENCE OF RELATED APPLICATION

The present disclosure claims a priority of Chinese patent disclosure No. 202210347757.2 filed on April 1, 2022, which is incorporated herein by reference in its entirety.

### TECHNICAL FIELD

The present disclosure relates to the field of communication technology, and in particular to a method for configuring discontinuous reception of a direct communication interface in a relay scenario and a device thereof.

### BACKGROUND

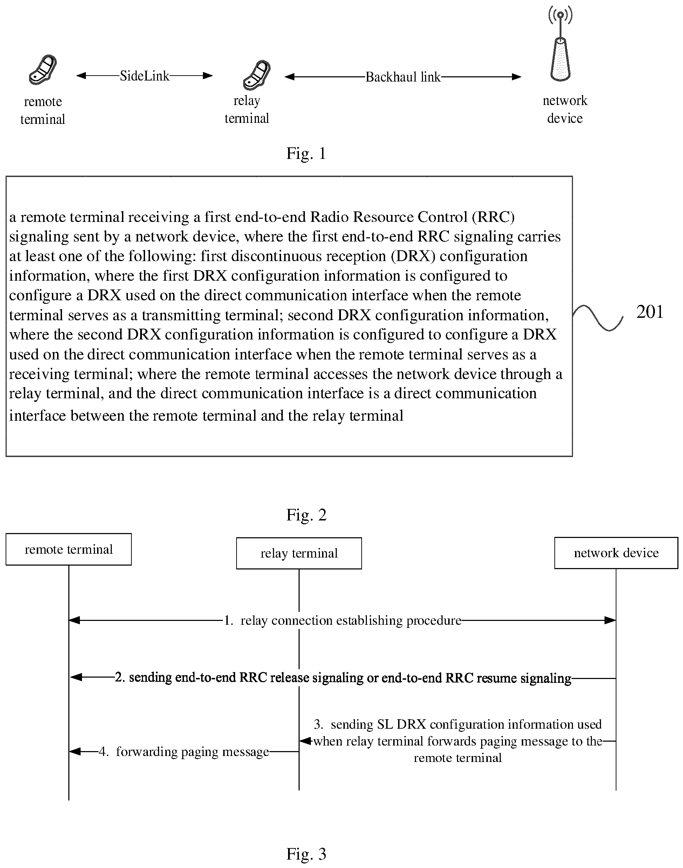

With the development of communication technology, relay technology has been introduced to expand network coverage. For the terminal relay to network (UE-to-Network Relay, U2N relay) shown in Fig. 1, the interface between the relay terminal and the network device uses the cellular network communication interface (Uu interface), and the interface between the relay terminal and the remote terminal (also known as the relayed terminal) uses the direct communication interface (also known as the bypass (SideLink, SL) or PC5 interface).

After introducing U2N relay, how to achieve power saving of direct communication interface in this scenario becomes an urgent problem to be solved.

### SUMMARY

The present disclosure is to provide a method and device for configuring discontinuous reception of a direct communication interface in a relay scenario, so as to solve the problem of power saving of the direct communication interface in a U2N relay scenario.

In order to achieve the above object, an embodiment of the present disclosure provides a method for configuring discontinuous reception of a direct communication interface in a relay scenario, including:
a remote terminal receiving a first end-to-end Radio Resource Control (RRC) signaling sent by a network device, where the first end-to-end RRC signaling carries at least one of the following:
first discontinuous reception (DRX) configuration information, where the first DRX configuration information is configured to configure a DRX used on the direct communication interface when the remote terminal serves as a transmitting terminal;
second DRX configuration information, where the second DRX configuration information is configured to configure a DRX used on the direct communication interface when the remote terminal serves as a receiving terminal;
where the remote terminal accesses the network device through a relay terminal, and the direct communication interface is a direct communication interface between the remote terminal and the relay terminal.

Optionally, before the remote terminal receiving the first end-to-end radio resource control RRC signaling sent by the network device, the method further includes:
the remote terminal receiving auxiliary information from the relay terminal via a PC5 interface RRC signaling;
the remote terminal sending the auxiliary information to the network device through a second end-to-end RRC signaling between the remote terminal and the network device;
where the auxiliary information is direct communication interface DRX configuration information expected by the relay terminal when the relay terminal serves as the receiving terminal.

Optionally, before the remote terminal receiving the first end-to-end radio resource control RRC signaling sent by the network device, the method further includes:
the remote terminal sending auxiliary information to the network device through a third end-to-end RRC signaling between the remote terminal and the network device;
where the auxiliary information is direct communication interface DRX configuration information expected by the remote terminal when the remote terminal serves as the receiving terminal.

Optionally, the first DRX configuration information includes a DRX configuration for data transmission of the direct communication interface between the remote terminal and the relay terminal in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

Optionally, after the remote terminal receiving the first end-to-end radio resource control RRC signaling sent by the network device, the method further includes:
when the remote terminal is a transmitting terminal and the first end-to-end RRC signaling carries the first DRX configuration information,
the remote terminal sending the first DRX configuration information to the relay terminal via a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

A method for configuring discontinuous reception of a direct communication interface in a relay scenario is provided in an embodiment of the present disclosure, including:
a relay terminal receiving a fourth end-to-end RRC signaling sent by a network device, where the fourth end-to-end RRC signaling carries at least one of the following:
third DRX configuration information, where the third DRX configuration information is configured to configure a DRX used on a direct communication interface when the relay terminal serves as a transmitting terminal;
fourth DRX configuration information, where the fourth DRX configuration information is configured to configure a DRX used on the direct communication interface when the relay terminal serves as a receiving terminal;
where the relay terminal is a relay terminal used when a remote terminal accesses the network device, and the direct communication interface is a direct communication interface between the remote terminal and the relay terminal.

Optionally, before the relay terminal receiving the fourth end-to-end RRC signaling sent by the network device, the method further includes:
the relay terminal receiving auxiliary information from the remote terminal via a PC5 interface RRC signaling;
the relay terminal sending the auxiliary information to the network device through a fifth end-to-end RRC signaling between the relay terminal and the network device;
where the auxiliary information is direct communication interface DRX configuration information expected by the remote terminal when the remote terminal serves as the receiving terminal.

Optionally, before the relay terminal receiving the fourth end-to-end RRC signaling sent by the network device, the method further includes:
the relay terminal sending the auxiliary information to the network device through a sixth end-to-end RRC signaling between the relay terminal and the network device;
where the auxiliary information is direct communication interface DRX configuration information expected by the relay terminal when the relay terminal serves as the receiving terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, after the relay terminal receiving the fourth end-to-end RRC signaling sent by the network device, the method further includes:
the relay terminal sending the third DRX configuration information to the relay terminal through a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

Optionally, before the relay terminal receiving the fourth end-to-end RRC signaling sent by the network device, the method further includes:
the relay terminal forwarding system information based on fifth DRX configuration information, where the fifth DRX configuration information is pre-configured; or
the relay device sending the system information via a direct communication interface broadcast message.

A method for configuring discontinuous reception of a direct communication interface in a relay scenario is provided in an embodiment of the present disclosure, including:
a network device sending a first end-to-end RRC signaling to a remote terminal; and/or,
the network device sending a fourth end-to-end RRC signaling to a relay terminal;
where the first end-to-end RRC signaling carries at least one of the following:
first DRX configuration information, where the first DRX configuration information is configured to configure a DRX used on a direct communication interface when the remote terminal serves as a transmitting terminal;
second DRX configuration information, where the second DRX configuration information is configured to configure a DRX used on the direct communication interface when the remote terminal serves as a receiving terminal;
where the fourth end-to-end RRC signaling carries at least one of the following:
third DRX configuration information, where the third DRX configuration information is configured to configure a DRX used on the direct communication interface when the relay terminal serves as a transmitting terminal;
fourth DRX configuration information, where the fourth DRX configuration information is configured to configure the DRX used on the direct communication interface when the relay terminal serves as a receiving terminal; and
where the remote terminal accesses the network device through the relay terminal, and the direct communication interface is a direct communication interface between the remote terminal and the relay terminal.

Optionally, before the network device sending the first end-to-end RRC signaling to the remote terminal, the method further includes:
the network device receiving auxiliary information which is sent by the remote terminal through a second end-to-end RRC signaling;
where the auxiliary information is sent after being obtained by the remote terminal from the relay terminal through a PC5 interface RRC signaling, and the auxiliary information is direct communication interface DRX configuration information expected by the relay terminal when the relay terminal serves as the receiving terminal.

Optionally, before the network device sending the first end-to-end RRC signaling to the remote terminal, the method further includes:
the network device receiving the auxiliary information which is sent by the remote terminal through a third end-to-end RRC signaling;
where the auxiliary information is direct communication interface DRX configuration information expected by the remote terminal when the remote terminal serves as the receiving terminal.

Optionally, before the network device sending the fourth end-to-end RRC signaling to the relay terminal, the method further includes:
the network device receiving the auxiliary information which is sent by the relay terminal through a fifth end-to-end RRC signaling;
where the auxiliary information is sent after being obtained by the relay terminal from the remote terminal through a PC5 interface RRC signaling, and the auxiliary information is the direct communication interface DRX configuration information expected by the remote terminal when the remote terminal serves as a receiving terminal.

Optionally, before the network device sending the fourth end-to-end RRC signaling to the relay terminal, the method further includes:
the network device receiving the auxiliary information which is sent by the relay terminal through a sixth end-to-end RRC signaling;
the auxiliary information is the direct communication interface DRX configuration information expected by the relay terminal when the relay terminal serves as a receiving terminal.

Optionally, the first DRX configuration information includes a DRX configuration of the direct communication interface between the remote terminal and the relay terminal for data transmission in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

A remote terminal is provided in an embodiment of the present disclosure, including: a memory, a transceiver, and a processor;
where the memory is configured to store program instructions; the transceiver is configured to transmit and receive data under a control of the processor; the processor is configured to read program instructions in the memory; and the transceiver is configured to perform:
receiving a first end-to-end Radio Resource Control (RRC) signaling sent by a network device, where the first end-to-end RRC signaling carries at least one of the following:
first discontinuous reception (DRX) configuration information, where the first DRX configuration information is configured to configure a DRX used on the direct communication interface when the remote terminal serves as a transmitting terminal;
second DRX configuration information, where the second DRX configuration information is configured to configure a DRX used on the direct communication interface when the remote terminal serves as a receiving terminal;
where the remote terminal accesses the network device through a relay terminal, and the direct communication interface is a direct communication interface between the remote terminal and the relay terminal.

Optionally, the transceiver is further configured to perform:
receiving auxiliary information from the relay terminal via a PC5 interface RRC signaling;
sending the auxiliary information to the network device through a second end-to-end RRC signaling between the remote terminal and the network device;
where the auxiliary information is direct communication interface DRX configuration information expected by the relay terminal when the relay terminal serves as the receiving terminal.

Optionally, the transceiver is further configured to perform:
sending auxiliary information to the network device through a third end-to-end RRC signaling between the remote terminal and the network device;
where the auxiliary information is direct communication interface DRX configuration information expected by the remote terminal when the remote terminal serves as the receiving terminal.

Optionally, the first DRX configuration information includes a DRX configuration for data transmission of the direct communication interface between the remote terminal and the relay terminal in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

Optionally, after the remote terminal receiving the first end-to-end radio resource control RRC signaling sent by the network device, the transceiver is further configured to perform:
when the remote terminal is a transmitting terminal and the first end-to-end RRC signaling carries the first DRX configuration information,
sending the first DRX configuration information to the relay terminal via a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

A remote terminal is further provided in an embodiment of the present disclosure, including:
a first receiving module, configured to receive a first end-to-end Radio Resource Control (RRC) signaling sent by a network device, where the first end-to-end RRC signaling carries at least one of the following:
first discontinuous reception (DRX) configuration information, where the first DRX configuration information is configured to configure a DRX used on the direct communication interface when the remote terminal serves as a transmitting terminal;
second DRX configuration information, where the second DRX configuration information is configured to configure a DRX used on the direct communication interface when the remote terminal serves as a receiving terminal;
where the remote terminal accesses the network device through a relay terminal, and the direct communication interface is a direct communication interface between the remote terminal and the relay terminal.

Optionally, the remote terminal further includes:
a third receiving module, configured to receive auxiliary information from the relay terminal via a PC5 interface RRC signaling;
a second sending module, configured to send the auxiliary information to the network device through a second end-to-end RRC signaling between the remote terminal and the network device;
where the auxiliary information is direct communication interface DRX configuration information expected by the relay terminal when the relay terminal serves as the receiving terminal.

Optionally, the remote terminal further includes:
a third sending module, configured to send auxiliary information to the network device through a third end-to-end RRC signaling between the remote terminal and the network device;
where the auxiliary information is direct communication interface DRX configuration information expected by the remote terminal when the remote terminal serves as the receiving terminal.

Optionally, the first DRX configuration information includes a DRX configuration for data transmission of the direct communication interface between the remote terminal and the relay terminal in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

Optionally, the remote terminal further includes:
a fourth sending module, configured to, when the remote terminal is a transmitting terminal and the first end-to-end RRC signaling carries the first DRX configuration information, send the first DRX configuration information to the relay terminal via a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

A relay terminal is further provided in an embodiment of the present disclosure, including: a memory, a transceiver, and a processor;
where the memory is configured to store program instructions; the transceiver is configured to transmit and receive data under a control of the processor; the processor is configured to read program instructions in the memory; and the transceiver is configured to perform:
receiving a fourth end-to-end RRC signaling sent by a network device, where the fourth end-to-end RRC signaling carries at least one of the following:
third DRX configuration information, where the third DRX configuration information is configured to configure a DRX used on a direct communication interface when the relay terminal serves as a transmitting terminal;
fourth DRX configuration information, where the fourth DRX configuration information is configured to configure a DRX used on the direct communication interface when the relay terminal serves as a receiving terminal;
where the relay terminal is a relay terminal used when a remote terminal accesses the network device, and the direct communication interface is a direct communication interface between the remote terminal and the relay terminal.

Optionally, the transceiver is further configured to perform:
receiving auxiliary information from the remote terminal via a PC5 interface RRC signaling;
sending the auxiliary information to the network device through a fifth end-to-end RRC signaling between the relay terminal and the network device;
where the auxiliary information is direct communication interface DRX configuration information expected by the remote terminal when the remote terminal serves as the receiving terminal.

Optionally, the transceiver is further configured to perform:
sending the auxiliary information to the network device through a sixth end-to-end RRC signaling between the relay terminal and the network device;
where the auxiliary information is direct communication interface DRX configuration information expected by the relay terminal when the relay terminal serves as the receiving terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, where the transceiver is further configured to perform:
sending the third DRX configuration information to the relay terminal through a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

Optionally, the transceiver is further configured to perform:
forwarding system information based on fifth DRX configuration information, where the fifth DRX configuration information is pre-configured; or
sending the system information via a direct communication interface broadcast message.

A relay terminal is further provided in an embodiment of the present disclosure, including:
a second receiving module, configured to receive a fourth end-to-end RRC signaling sent by a network device, where the fourth end-to-end RRC signaling carries at least one of the following:
third DRX configuration information, where the third DRX configuration information is configured to configure a DRX used on a direct communication interface when the relay terminal serves as a transmitting terminal;
fourth DRX configuration information, where the fourth DRX configuration information is configured to configure a DRX used on the direct communication interface when the relay terminal serves as a receiving terminal;
where the relay terminal is a relay terminal used when a remote terminal accesses the network device, and the direct communication interface is a direct communication interface between the remote terminal and the relay terminal.

Optionally, the relay terminal further includes:
a fourth receiving module, configured to receive auxiliary information from the remote terminal via a PC5 interface RRC signaling;
a fifth sending module, configured to send the auxiliary information to the network device through a fifth end-to-end RRC signaling between the relay terminal and the network device;
where the auxiliary information is direct communication interface DRX configuration information expected by the remote terminal when the remote terminal serves as the receiving terminal.

Optionally, the relay terminal further includes:
a sixth sending module, configured to send the auxiliary information to the network device through a sixth end-to-end RRC signaling between the relay terminal and the network device;
where the auxiliary information is direct communication interface DRX configuration information expected by the relay terminal when the relay terminal serves as the receiving terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, the relay terminal further includes:
a seventh sending module, configured to send the third DRX configuration information to the relay terminal through a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

Optionally, the relay terminal further includes:
an eighth sending module, configured to:
forward system information based on fifth DRX configuration information, where the fifth DRX configuration information is pre-configured; or
send the system information via a direct communication interface broadcast message.

A network device is further provided in an embodiment of the present disclosure, including: a memory, a transceiver, and a processor;
where the memory is configured to store program instructions; the transceiver is configured to transmit and receive data under a control of the processor; the processor is configured to read program instructions in the memory; and the transceiver is configured to perform:
sending a first end-to-end RRC signaling to a remote terminal; and/or,
sending a fourth end-to-end RRC signaling to a relay terminal;
where the first end-to-end RRC signaling carries at least one of the following:
   first DRX configuration information, where the first DRX configuration information is configured to configure a DRX used on a direct communication interface when the remote terminal serves as a transmitting terminal;
   second DRX configuration information, where the second DRX configuration information is configured to configure a DRX used on the direct communication interface when the remote terminal serves as a receiving terminal;
   where the fourth end-to-end RRC signaling carries at least one of the following:
      third DRX configuration information, where the third DRX configuration information is configured to configure a DRX used on the direct communication interface when the relay terminal serves as a transmitting terminal;
      fourth DRX configuration information, where the fourth DRX configuration information is configured to configure the DRX used on the direct communication interface when the relay terminal serves as a receiving terminal; and
      where the remote terminal accesses the network device through the relay terminal, and the direct communication interface is a direct communication interface between the remote terminal and the relay terminal.

Optionally, the transceiver is further configured to perform:
receiving auxiliary information which is sent by the remote terminal through a second end-to-end RRC signaling;
where the auxiliary information is sent after being obtained by the remote terminal from the relay terminal through a PC5 interface RRC signaling, and the auxiliary information is direct communication interface DRX configuration information expected by the relay terminal when the relay terminal serves as the receiving terminal.

Optionally, the transceiver is further configured to perform:
receiving the auxiliary information which is sent by the remote terminal through a third end-to-end RRC signaling;
where the auxiliary information is direct communication interface DRX configuration information expected by the remote terminal when the remote terminal serves as the receiving terminal.

Optionally, the transceiver is further configured to perform:
receiving the auxiliary information which is sent by the relay terminal through a fifth end-to-end RRC signaling;
where the auxiliary information is sent after being obtained by the relay terminal from the remote terminal through a PC5 interface RRC signaling, and the auxiliary information is the direct communication interface DRX configuration information expected by the remote terminal when the remote terminal serves as a receiving terminal.

Optionally, the transceiver is further configured to perform:
receiving the auxiliary information which is sent by the relay terminal through a sixth end-to-end RRC signaling;
the auxiliary information is the direct communication interface DRX configuration information expected by the relay terminal when the relay terminal serves as a receiving terminal.

Optionally, the first DRX configuration information includes a DRX configuration of the direct communication interface between the remote terminal and the relay terminal for data transmission in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

A network device is further provided in an embodiment of the present disclosure, including:
a first sending module, configured to a send a first end-to-end RRC signaling to a remote terminal; and/or, sending a fourth end-to-end RRC signaling to a relay terminal;
where the first end-to-end RRC signaling carries at least one of the following:
first DRX configuration information, where the first DRX configuration information is configured to configure a DRX used on a direct communication interface when the remote terminal serves as a transmitting terminal;
second DRX configuration information, where the second DRX configuration information is configured to configure a DRX used on the direct communication interface when the remote terminal serves as a receiving terminal;
where the fourth end-to-end RRC signaling carries at least one of the following:
third DRX configuration information, where the third DRX configuration information is configured to configure a DRX used on the direct communication interface when the relay terminal serves as a transmitting terminal;
fourth DRX configuration information, where the fourth DRX configuration information is configured to configure the DRX used on the direct communication interface when the relay terminal serves as a receiving terminal; and
where the remote terminal accesses the network device through the relay terminal, and the direct communication interface is a direct communication interface between the remote terminal and the relay terminal.

Optionally, the network device further includes:
a fifth receiving module, configured to receive auxiliary information which is sent by the remote terminal through a second end-to-end RRC signaling;
where the auxiliary information is sent after being obtained by the remote terminal from the relay terminal through a PC5 interface RRC signaling, and the auxiliary information is direct communication interface DRX configuration information expected by the relay terminal when the relay terminal serves as the receiving terminal.

Optionally, the network device further includes:
a sixth receiving module, configured to receive the auxiliary information which is sent by the remote terminal through a third end-to-end RRC signaling;
where the auxiliary information is direct communication interface DRX configuration information expected by the remote terminal when the remote terminal serves as the receiving terminal.

Optionally, the network device further includes:
a seventh receiving module, configured to receive the auxiliary information which is sent by the relay terminal through a fifth end-to-end RRC signaling;
where the auxiliary information is sent after being obtained by the relay terminal from the remote terminal through a PC5 interface RRC signaling, and the auxiliary information is the direct communication interface DRX configuration information expected by the remote terminal when the remote terminal serves as a receiving terminal.

Optionally, the network device further includes:
an eighth receiving module, configured to receive the auxiliary information which is sent by the relay terminal through a sixth end-to-end RRC signaling;
the auxiliary information is the direct communication interface DRX configuration information expected by the relay terminal when the relay terminal serves as a receiving terminal.

Optionally, the first DRX configuration information includes a DRX configuration of the direct communication interface between the remote terminal and the relay terminal for data transmission in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

A processor-readable storage medium is further provided in an embodiment of the present disclosure, storing a computer program, where the computer program is configured to cause the processor to execute the method for configuring discontinuous reception of a direct communication interface in a relay scenario performed by the remote terminal, or the method for configuring discontinuous reception of a direct communication interface in a relay scenario performed by the relay terminal, or the method for configuring discontinuous reception of a direct communication interface in a relay scenario performed by the network device.

The embodiment of the present disclosure has at least the following beneficial effects:
in the above-mentioned technical scheme of the embodiment of the present disclosure, after the remote terminal receives the first end-to-end RRC signaling sent by the network device, if the first end-to-end RRC signaling includes first DRX configuration information, the remote terminal can obtain the DRX configuration used on the direct communication interface when the remote terminal serves as a sending terminal; if the first end-to-end RRC signaling includes second DRX configuration information, the remote terminal can obtain the DRX configuration used on the direct communication interface when the remote terminal serves as a receiving terminal, thereby achieving the purpose of power saving in the relay scenario.

### BRIEF DESCRIPTION OF THE DRAWINGS

Fig. 1 is a schematic diagram of UE-to-Network Relay;
Fig.2 is a schematic diagram of a method flow chart of an embodiment of the present disclosure;
Fig.3 is one of the application schematic diagrams of the method according to the embodiment of the present disclosure;
Fig.4 is a second schematic diagram of an application of the method according to an embodiment of the present disclosure;
Fig. 5 is a third schematic diagram of the application of the method according to the embodiment of the present disclosure;
Fig.6 is a fourth schematic diagram of the application of the method according to the embodiment of the present disclosure;
Fig.7 is a fifth schematic diagram of the application of the method according to the embodiment of the present disclosure;
Fig.8 is a sixth schematic diagram of the application of the method according to the embodiment of the present disclosure;
Fig.9 is a seventh schematic diagram of the application of the method according to the embodiment of the present disclosure;
Fig. 10 is an eighth schematic diagram of the application of the method according to the embodiment of the present disclosure;
Fig. 11 is a second schematic diagram of a method flow chart of an embodiment of the present disclosure;
Fig. 12 is a third schematic diagram of a method flow chart of an embodiment of the present disclosure;
Fig. 13 is a block diagram of a remote terminal corresponding to Fig.2;
Fig. 14 is a schematic diagram of a module of a remote terminal corresponding to Fig.2;
Fig. 15 is a structural block diagram of a relay terminal corresponding to Fig. 11;
Fig. 16 is a schematic diagram of a module of a relay terminal corresponding to Fig. 11;
Fig. 17 is a structural block diagram of a network device corresponding to Fig. 12; and
Fig. 18 is a module diagram of the network device corresponding to Fig. 12.

### DETAILED DESCRIPTION

In the following, the term "and/or" in the embodiments of the present disclosure is configured to describe the association relationship of the associated objects, indicating that three relationships may exist. For example, A and/or B may represent: A exists alone, A and B exist at the same time, and B exists alone. The character "/" generally indicates that the associated objects before and after are in an "or" relationship.

In the embodiments of the present disclosure, the term "plurality" refers to two or more than two, and other quantifiers are similar.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without creative work are within the scope of protection of this application.

The embodiments of the present disclosure provide a method and device for configuring discontinuous reception of a direct communication interface in a relay scenario. The method and the device are based on the same application concept. Since the method and the device solve the problem in a similar manner, the implementation of the device and the method can refer to each other, and the repeated parts will not be repeated.

As shown in Fig.2, a method for configuring discontinuous reception of a direct communication interface in a relay scenario provided by an embodiment of the present disclosure includes:
Step 201: a remote terminal receiving a first end-to-end Radio Resource Control (RRC) signaling sent by a network device, where the first end-to-end RRC signaling carries at least one of the following:
first discontinuous reception (DRX) configuration information, where the first DRX configuration information is configured to configure a DRX used on the direct communication interface when the remote terminal serves as a transmitting terminal;
second DRX configuration information, where the second DRX configuration information is configured to configure a DRX used on the direct communication interface when the remote terminal serves as a receiving terminal;
where the remote terminal accesses the network device through a relay terminal, and the direct communication interface is a direct communication interface between the remote terminal and the relay terminal.

After the remote terminal receives the RRC signaling sent by the network device, if the first end-to-end RRC signaling includes the first DRX configuration information, the remote terminal can obtain the DRX configuration used on the direct communication interface when the remote terminal serves as a sending terminal; if the first end-to-end RRC signaling includes the second DRX configuration information, the remote terminal can obtain the DRX configuration used on the direct communication interface when the remote terminal serves as a receiving terminal, thereby achieving the purpose of power saving in the relay scenario.

The first DRX configuration information is configured to configure the DRX used on the direct communication interface when the remote terminal is used as a transmitting terminal, and can also be understood as: the first DRX configuration information indicates the DRX configuration used on the direct communication interface between the remote terminal and its relay terminal when the remote terminal is used as a transmitting terminal. Similarly, the second DRX configuration information is configured to configure the DRX used on the direct communication interface when the remote terminal is used as a receiving terminal, and can also be understood as: the second DRX configuration information indicates the DRX configuration used on the direct communication interface between the remote terminal and its relay terminal when the remote terminal is used as a transmitting terminal.

It should be noted that, in this embodiment, before the remote terminal receives the first end-to-end RRC signaling, the remote terminal has established an end-to-end RRC connection through the relay terminal and the network device. Specifically, the process of establishing an end-to-end RRC connection by the remote terminal through the relay terminal and the network device can be based on the process of establishing an end-to-end RRC connection in a layer 2 (Layer 2, L2) terminal-to-network scenario, which will not be repeated here.

Optionally, the first DRX configuration information includes a DRX configuration of a direct communication interface between the remote terminal and the relay terminal for data transmission in an uplink transmission direction.

That is to say, when the remote terminal, as a sending terminal, receives the first end-to-end RRC signaling, and the first end-to-end RRC signaling carries the first DRX configuration information, the remote terminal can obtain the DRX configuration of the direct communication interface between it and the relay terminal for data transmission in the uplink transmission direction, so that the remote terminal performs uplink transmission according to the DRX configuration.

Optionally, in this embodiment, the first DRX configuration information may be carried by end-to-end RRC reconfiguration signaling, that is, the first end-to-end RRC signaling is end-to-end RRC reconfiguration signaling.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

That is to say, when the remote terminal, as a receiving terminal, receives the first end-to-end RRC signaling, and the first end-to-end RRC signaling carries the second DRX configuration information, the remote terminal can obtain at least one of the following: the DRX configuration of the direct communication interface between the remote terminal and the relay terminal for data transmission in the downlink transmission direction; the SL DRX configuration used when the relay terminal forwards a paging message to the remote terminal in the downlink transmission direction; the SL DRX configuration used when the relay terminal forwards system information to the remote terminal in the downlink transmission direction. Among them, the SL DRX configuration used when the relay terminal forwards the paging message to the remote terminal can also be understood as: the DRX configuration of the direct communication interface between the remote terminal and the relay terminal for paging message transmission. And the SL DRX configuration used when the relay terminal forwards system information to the remote terminal can also be understood as: the DRX configuration of the direct communication interface between the remote terminal and the relay terminal for system message transmission.

As such, the remote terminal may receive data, paging messages or system messages sent by the relay terminal according to the corresponding DRX configuration.

Optionally, in this embodiment, the second DRX configuration information may be carried by one of the following signalings: end-to-end RRC reconfiguration signaling, end-to-end RRC resume signaling, and end-to-end RRC release signaling. That is, the first end-to-end RRC signaling is end-to-end RRC reconfiguration signaling, end-to -end RRC resume signaling, or end-to-end RRC release signaling.

Optionally, after the remote terminal receives the first end-to-end radio resource control RRC signaling sent by the network device, the further step further includes:
when the remote terminal is a sending terminal and the first end-to-end RRC signaling carries the first DRX configuration information, the remote terminal sending the first DRX configuration information to the relay terminal through PC5 interface RRC signaling.

Therefore, the relay terminal can obtain the first DRX configuration information through PC5 interface RRC signaling.

Of course, when the remote terminal is a receiving terminal and the first end-to-end RRC signaling carries the second DRX configuration information, the remote terminal can also send the second DRX configuration information to the relay terminal via PC5 interface RRC signaling so that the relay terminal learns the second DRX configuration information.

It should be noted that, in this embodiment, the network device may also send a fourth end-to-end RRC signaling to the relay terminal, where the fourth end-to-end RRC signaling carries at least one of the following:
third DRX configuration information, where the third DRX configuration information is configured to configure the DRX used on the direct communication interface when the relay terminal serves as a transmitting terminal;
fourth DRX configuration information, where the fourth DRX configuration information is configured to configure the DRX used on the direct communication interface when the relay terminal serves as a receiving terminal;

The relay terminal is used for a remote terminal to access the network device, and the direct communication interface is a direct communication interface between the remote terminal and the relay terminal.

That is, the relay terminal can also be like a remote terminal. After receiving the fourth end-to-end RRC signaling sent by the network device, if the fourth end-to-end RRC signaling includes the third DRX configuration information, the relay terminal can obtain the DRX configuration used on the direct communication interface when the relay terminal is a transmitting terminal; if the fourth end-to-end RRC signaling includes the fourth DRX configuration information, the relay terminal can obtain the DRX configuration used on the direct communication interface when the relay terminal is a receiving terminal.

The third DRX configuration information is configured to configure the DRX used on the direct communication interface when the relay terminal is used as a transmitting terminal, and can also be understood as: the third DRX configuration information indicates the DRX configuration used on the direct communication interface when the relay terminal is used as a transmitting terminal. Similarly, the fourth DRX configuration information is configured to configure the DRX used on the direct communication interface when the relay terminal is used as a receiving terminal, and can also be understood as: the fourth DRX configuration information indicates the DRX configuration used on the direct communication interface when the relay terminal is used as a transmitting terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

That is to say, when the relay terminal, as a sending terminal, receives the fourth end-to-end RRC signaling, and the fourth end-to-end RRC signaling carries the third DRX configuration information, the relay terminal can obtain at least one of the following: the DRX configuration of the direct communication interface between the remote terminal and the relay terminal for data transmission in the downlink transmission direction; the SL DRX configuration used by the relay terminal when forwarding the paging message to the remote terminal in the downlink transmission direction; the SL DRX configuration used by the relay terminal when forwarding the system information to the remote terminal in the downlink transmission direction. Among them, the SL DRX configuration used by the relay terminal when forwarding the paging message to the remote terminal can also be understood as: the DRX configuration of the direct communication interface between the remote terminal and the relay terminal for paging message transmission. And the SL DRX configuration used by the relay terminal when forwarding the system information to the remote terminal can also be understood as: the DRX configuration of the direct communication interface between the remote terminal and the relay terminal for system message transmission.

As such, the relay terminal may send data, paging messages or system messages according to the corresponding DRX configuration.

Optionally, the fourth DRX configuration information includes a DRX configuration for a direct communication interface between the remote terminal and the relay terminal for data transmission in an uplink transmission direction.

That is to say, when the relay terminal, as a receiving terminal, receives the fourth end-to-end RRC signaling, and the fourth end-to-end RRC signaling carries the fourth DRX configuration information, the relay terminal can obtain the DRX configuration of the direct communication interface between it and the relay terminal for data transmission in the downlink transmission direction, so that the relay terminal receives data according to the DRX configuration.

In this embodiment, the fourth end-to-end RRC signaling sent by the network device may select different types of RRC signaling according to the RRC state of the relay terminal. For example, if the relay terminal is in the RRC connected state, the fourth end-to-end RRC signaling may be an end-to- end RRC reconfiguration signaling. If the network device wants the relay terminal to enter the idle (IDLE) / inactive (INACTIVE) state, the fourth end-to-end RRC signaling may be an end-to-end RRC release signaling or an end-to-end RRC resume signaling.

Optionally, after the relay terminal receives the fourth end-to-end RRC signaling, if the relay terminal is a sending terminal and the fourth end-to-end RRC signaling carries the third DRX configuration information, the relay terminal will send the third DRX configuration information to the relay terminal via PC5 interface RRC signaling so that the remote terminal can know the third DRX configuration information.

Optionally, after the relay terminal receives the fourth end-to-end RRC signaling, if the relay terminal is a receiving terminal and the fourth end-to-end RRC signaling carries the fourth DRX configuration information, the relay terminal may also send the fourth DRX configuration information to the relay terminal via PC5 interface RRC signaling so that the remote terminal may be informed of the fourth DRX configuration information.

In addition, optionally, in this embodiment, at least one of the first DRX configuration information, the second DRX configuration information, the third DRX configuration information and the fourth DRX configuration information sent by the network device will be determined based on the auxiliary information (i.e., the direct communication interface DRX configuration information expected by the receiving terminal) to better suit the current transmission.

Therefore, optionally, before the remote terminal receives the first end-to-end radio resource control RRC signaling sent by the network device, the method further includes:
the remote terminal receiving auxiliary information from the relay terminal via PC5 interface RRC signaling;
the remote terminal sending the auxiliary information to the network device through a second end-to-end RRC signaling between the remote terminal and the network device;
where the auxiliary information is direct communication interface DRX configuration information expected by the relay terminal when the relay terminal serves as the receiving terminal.

Here, the remote terminal serves as a sending terminal and the relay terminal serves as a receiving terminal. After the remote terminal first receives the direct communication interface DRX configuration information expected by the relay terminal from the relay terminal through the PC5 interface RRC signaling, the remote terminal will send the direct communication interface DRX configuration information expected by the relay terminal to the network device through the second end-to-end RRC signaling, so that the network device determines the first DRX configuration information and/or the fourth DRX configuration information.

Of course, the relay terminal, which is a receiving terminal, can also directly send its desired direct communication interface DRX configuration information to the network device through the sixth end-to-end RRC signaling.

Alternatively, optionally, before the remote terminal receives the first end-to-end radio resource control RRC signaling sent by the network device, the method further includes:
the remote terminal sending the auxiliary information to the network device through a third end-to-end RRC signaling between the remote terminal and the network device;
where the auxiliary information is direct communication interface DRX configuration information expected by the remote terminal when the remote terminal serves as the receiving terminal.

Here, the relay terminal serves as a sending terminal and the remote terminal serves as a receiving terminal. The remote terminal can directly send its desired direct communication interface DRX configuration information to the network device through the third end-to-end RRC signaling, so that the network device determines the second DRX configuration information and/or the third DRX configuration information.

Of course, the relay terminal may also first receive the direct communication interface DRX configuration information expected by the remote terminal from the remote terminal through PC5 interface RRC signaling, and then send the direct communication interface DRX configuration information expected by the remote terminal to the network device through the fifth end-to-end RRC signaling.

In addition, optionally, in this embodiment, the granularity of the auxiliary information includes at least one of the following:
a direct communication interface source address;
a direct communication interface target address; and
a cast type.

That is, the granularity of the auxiliary information is one or a combination of the direct communication interface source address, the direct communication interface target address, and the cast type.

Optionally, the auxiliary information includes one or more configuration information, and the configuration information includes at least one of the following:
a length of onDuration Timer;
a discontinuous reception or transmission cycle;
a discontinuous reception or transmission offset;
an inactivity timer length;
a HARQ round trip time timer (HARQ RTT Timer) length;
a HARQ retransmission timer length.

The following describes the application of the method of the embodiment of the present disclosure in combination with specific scenarios:
Scenario 1: As shown in Fig. 3, the SL DRX configuration process used by the relay terminal for paging message forwarding is as follows:
Step 1: The remote terminal establishes an end-to-end RRC connection through the relay terminal and the network device.
Step 2: The network device sends an end-to-end RRC release signaling or an end-to-end RRC resume signaling (i.e., the first end-to-end RRC signaling) to the remote terminal;

The end-to-end RRC release signaling or the end-to-end RRC resume signaling carries SL DRX configuration information (i.e., second DRX configuration information) used when the relay terminal forwards the paging message to the remote terminal.

Step 3: The network device sends a fourth end-to-end RRC signaling to the relay terminal, carrying SL DRX configuration information (i.e., third DRX configuration information) used when the relay terminal forwards the paging message to the remote terminal;
Among them, the fourth end-to-end RRC signaling may be different according to the RRC state of the relay terminal. For example, if the relay terminal is in the RRC connected state, the fourth end-to-end RRC signaling may be an RRC reconfiguration signaling. If the network wants the relay terminal to enter the IDLE/INACTIVE state, RRC release or RRC resume signaling can be used.

Step 4: The relay terminal forwards the paging message;
At this time, after receiving the paging message for the remote terminal from the network device, the relay terminal can forward the paging message on the direct communication interface according to the SL DRX configuration information configured by the network device and used by the relay terminal when forwarding the paging message to the remote terminal.

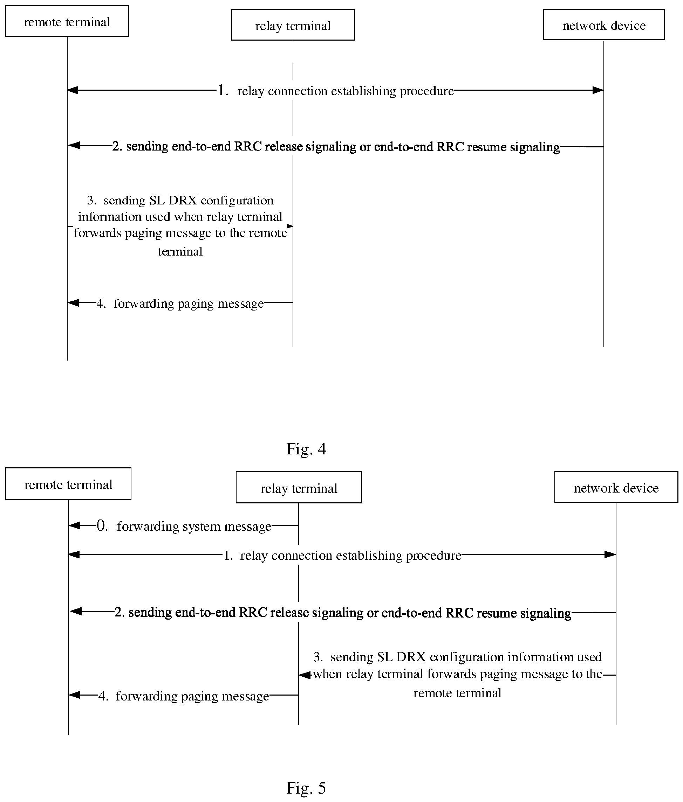

Scenario 2: As shown in Fig. 4, the SL DRX configuration process used by the relay terminal for paging message forwarding is as follows:
Step 1: The remote terminal establishes an end-to-end RRC connection through the relay terminal and the network device.
Step 2: The network device sends an end-to-end RRC release signaling or an end-to-end RRC resume signaling (i.e., the first end-to-end RRC signaling) to the remote terminal;

The end-to-end RRC release signaling or the end-to-end RRC resume signaling carries SL DRX configuration information (i.e., second DRX configuration information) used when the relay terminal forwards the paging message to the remote terminal.

Step 3: The remote terminal sends a PC5 interface RRC signaling to the relay terminal carrying the SL DRX configuration information used when forwarding the paging message to the remote terminal;
Among them, after the remote terminal receives the SL DRX configuration information used by the relay terminal to forward the paging message to the remote terminal sent by the network device through the end-to- end RRC release signaling or the end-to-end RRC resume signaling, it sends it to the relay terminal. The granularity of the SL DRX configuration can be one or a combination of the direct communication interface source address and the direct communication interface target address.

Step 4: The relay terminal forwards the paging message;
At this time, after receiving the paging message for the remote terminal from the network device, the relay terminal can forward the paging message on the direct communication interface according to the SL DRX configuration information configured by the network device and used by the relay terminal when forwarding the paging message to the remote terminal.

Scenario 3: As shown in Fig. 5, the SL DRX configuration process used by the relay terminal system information forwarding is as follows:
Step 0 (optional): the relay terminal forwards system information;
   Among them, before the relay terminal receives the SL DRX configuration used for system information forwarding configured by RRC dedicated signaling (for example, the relay terminal is in IDLE state), the SL DRX configuration used for system information forwarding is pre-configured or sent by the relay terminal through a direct communication interface broadcast message.
Step 1: The remote terminal establishes an end-to-end RRC connection through the relay terminal and the network device.
Step 2: The network device sends an end-to-end RRC release signaling or an end-to-end RRC resume signaling (i.e., the first end-to-end RRC signaling) to the remote terminal;
   The end-to-end RRC release signaling or the end-to-end RRC resume signaling carries SL DRX configuration information (i.e., second DRX configuration information) used when the relay terminal forwards system information to the remote terminal.
Step 3: The network device sends a fourth end-to-end RRC signaling to the relay terminal, carrying SL DRX configuration information (i.e., third DRX configuration information) used by the relay terminal when forwarding system information to the remote terminal;

Among them, the fourth end-to-end RRC signaling may be different according to the RRC state of the relay terminal. For example, if the relay terminal is in the RRC connected state, the fourth end-to-end RRC signaling may be an RRC reconfiguration signaling. If the network wants the relay terminal to enter the IDLE/INACTIVE state, RRC release or RRC resume signaling can be used.

Step 4: The relay terminal forwards the system information;
At this time, after the relay terminal receives the system information from the network device, for the system information that needs to be forwarded to the remote terminal, the direct communication interface forwards the system information according to the direct communication link DRX configuration configured by the network device and used by the relay terminal when forwarding the system information to the remote terminal.

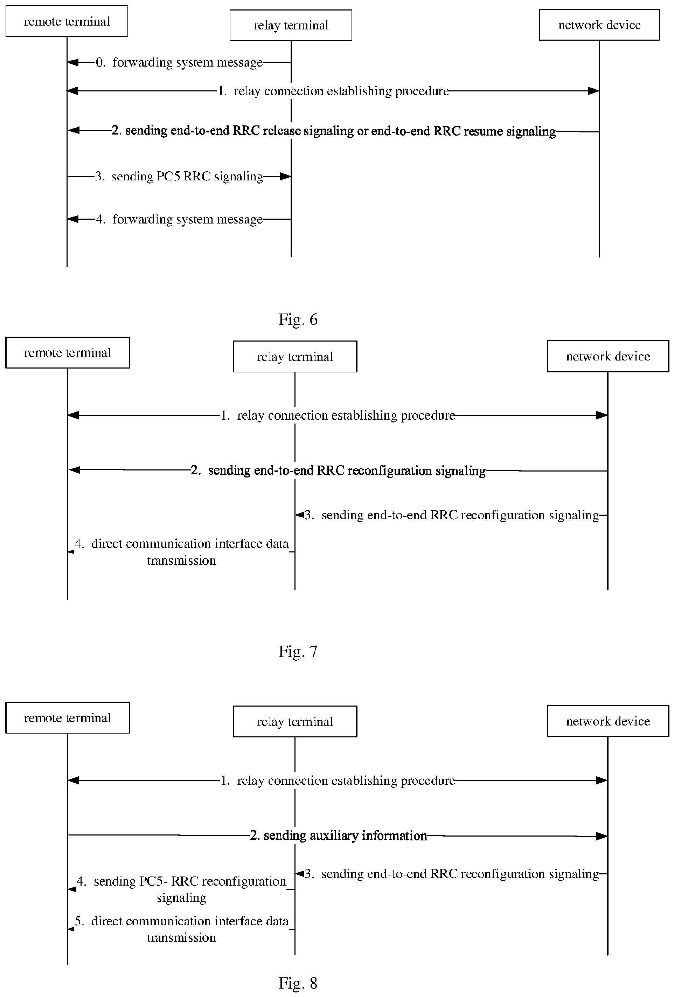

Scenario 4: As shown in Fig. 6, the SL DRX configuration process used by the relay terminal system information forwarding is as follows:
Step 0 (optional): the relay terminal forwards system information;
Among them, before the relay terminal receives the SL DRX configuration used for system information forwarding configured by RRC dedicated signaling (for example, the relay terminal is in IDLE state), the SL DRX configuration used for system information forwarding is pre-configured or sent by the relay terminal through a direct communication interface broadcast message.

Step 1: The remote terminal establishes an end-to-end RRC connection through the relay terminal and the network device.

Step 2: The network device sends an end-to-end RRC release signaling or an end-to-end RRC resume signaling (i.e., the first end-to-end RRC signaling) to the remote terminal;
The end-to-end RRC release signaling or the end-to-end RRC resume signaling carries SL DRX configuration information (i.e., second DRX configuration information) used when the relay terminal forwards system information to the remote terminal.

Step 3: The remote terminal sends a PC5 interface RRC signaling to the relay terminal carrying the SL DRX configuration information used when forwarding system information to the remote terminal;
Among them, after the remote terminal receives the SL DRX configuration information used by the relay terminal to forward system information to the remote terminal sent by the network device through end-to-end RRC release signaling or end-to-end RRC resume signaling, it sends it to the relay terminal. The granularity of the SL DRX configuration can be one or a combination of the direct communication interface source address and the direct communication interface target address.

Step 4: The relay terminal forwards the system information;
At this time, after the relay terminal receives the system information from the network device, for the system information that needs to be forwarded to the remote terminal, the direct communication interface forwards the system information according to the direct communication link DRX configuration configured by the network device and used by the relay terminal when forwarding the system information to the remote terminal.

Scenario 5: As shown in Fig. 7, the SL DRX configuration process used for data transmission in the downlink transmission direction is as follows:
Step 1: The remote terminal establishes an end-to-end RRC connection through the relay terminal and the network device.
Step 2: The network device sends an end-to-end RRC reconfiguration signaling (i.e., the first end-to-end RRC signaling) to the remote terminal;

The end-to-end RRC reconfiguration signaling carries SL DRX configuration information (i.e., second DRX configuration information) used on the direct communication interface when the relay terminal sends downlink data to the remote terminal.

Optionally, before this step, the remote terminal also includes sending auxiliary information to the network device to which it accesses through end-to-end RRC signaling.

Step 3: The network device sends an end-to-end RRC reconfiguration signaling (i.e., the fourth end-to-end RRC signaling) to the relay terminal;
The RRC reconfiguration signaling carries SL DRX configuration information (i.e., third DRX configuration information) used on the direct communication interface when the relay terminal sends downlink data to the remote terminal.

Step 4: The relay terminal performs direct communication interface data transmission;
The relay terminal sends direct communication interface sidelink control information (Sidelink Control Information, SCI) and data to the remote terminal according to the direct communication interface SL DRX configuration obtained in step 3;
the SCI sent by the relay terminal according to the direct communication interface SL DRX configuration obtained in step 2, and performs data reception according to the SCI.

It should be noted that there is no strict order between the above steps 2 and 3.

Scenario 6: As shown in Fig.8, the SL DRX configuration process used for data transmission in the downlink transmission direction is as follows:
Step 1: The remote terminal establishes an end-to-end RRC connection through the relay terminal and the network device.
Step 2: The remote terminal sends auxiliary information to the network device;
   sends the auxiliary information to the network device to which it is connected through end-to-end RRC signaling (i.e., the third end-to-end RRC signaling).
Step 3: The network device sends an end-to-end RRC reconfiguration signaling (i.e., the fourth end-to-end RRC signaling) to the relay terminal;

The RRC reconfiguration signaling carries SL DRX configuration information (i.e., third DRX configuration information) on the direct communication interface when the relay terminal sends downlink data to the remote terminal.

Step 4: The relay terminal sends a PC5-RRC reconfiguration signaling (i.e., PC5 interface RRC signaling) to the remote terminal;
notifies the remote terminal of the SL DRX configuration used for downlink data transmission of the direct communication interface acquired in step 3 through the PC5-RRC reconfiguration signaling.

Step 5: The relay terminal performs direct communication interface data transmission;
The relay terminal sends the direct communication interface SCI and data to the remote terminal according to the direct communication interface SL DRX configuration obtained in step 3;
the SCI sent by the relay terminal according to the direct communication interface SL DRX configuration obtained in step 4, and performs data reception according to the SCI.

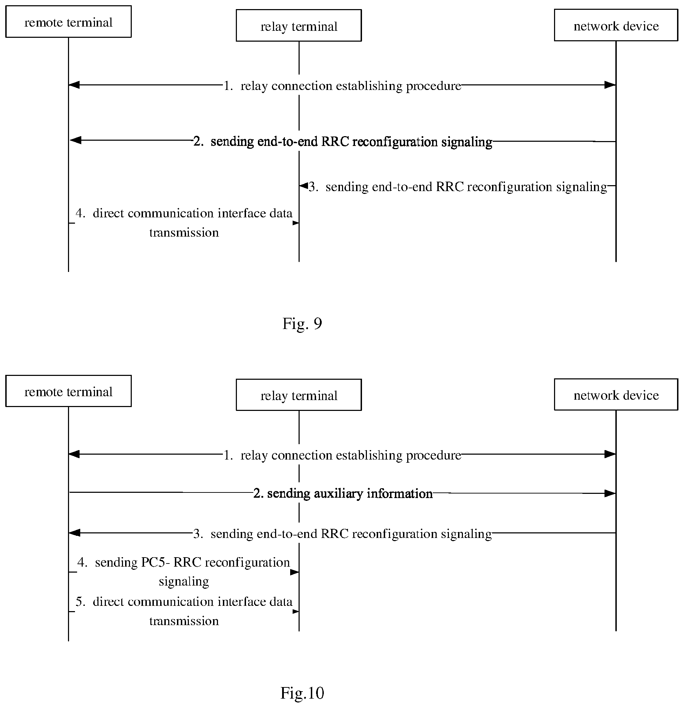

Scenario 7, as shown in Fig. 9, the SL DRX configuration process used for data transmission in the uplink transmission direction:
Step 1: The remote terminal establishes an end-to-end RRC connection through the relay terminal and the network device.
Step 2: The network device sends an end-to-end RRC reconfiguration signaling (i.e., the first end-to-end RRC signaling) to the remote terminal;

The end-to-end RRC reconfiguration signaling includes SL DRX configuration information (i.e., first DRX configuration information) used on the direct communication interface when the remote terminal sends uplink data to the relay terminal.

Optionally, before this step, the remote terminal also includes sending auxiliary information to the network device to which it accesses through end-to-end RRC signaling.

Step 3: The network device sends an end-to-end RRC reconfiguration signaling (i.e., the fourth end-to-end RRC signaling) to the relay terminal;
The RRC reconfiguration signaling carries SL DRX configuration information (i.e., fourth DRX configuration information) used on the direct communication interface when the remote terminal sends uplink data to the relay terminal.

Step 4: The remote terminal performs direct communication interface data transmission;
the SCI and data in the uplink direction of the direct communication interface to the relay terminal according to the direct communication interface SL DRX configuration obtained in step 3;
the SCI sent by the remote terminal according to the direct communication interface SL DRX configuration obtained in step 2, and performs data reception according to the SCI.

It should be noted that there is no strict order between the above steps 2 and 3.

Scenario 8: As shown in Fig. 10, the SL DRX configuration process used for data transmission in the uplink transmission direction:
Step 1: The remote terminal establishes an end-to-end RRC connection through the relay terminal and the network device.
Step 2: The remote terminal sends auxiliary information to the network device;
   sends the auxiliary information to the network device to which it accesses through end-to-end RRC signaling (i.e., second end-to-end RRC signaling).
Step 3: The network device sends an end-to-end RRC reconfiguration signaling (i.e., the first end-to-end RRC signaling) to the remote terminal;
   The RRC reconfiguration signaling carries SL DRX configuration information (i.e., first DRX configuration information) used on the direct communication interface when the remote terminal sends uplink data to the relay terminal.
Step 4: The remote terminal sends a PC5-RRC reconfiguration signaling (i.e., PC5 interface RRC signaling) to the relay terminal;
   The remote terminal notifies the relay terminal of the SL DRX configuration used for uplink data transmission of the direct communication interface acquired in step 3 through PC5-RRC reconfiguration signaling.
Step 5: The remote terminal performs direct communication interface data transmission;
   the SCI and data in the uplink direction of the direct communication interface to the remote terminal according to the direct communication interface SL DRX configuration obtained in step 3;
   the SCI sent by the remote terminal according to the direct communication interface SL DRX configuration obtained in step 4, and performs data reception according to the SCI.

In summary, the method of the embodiment of the present disclosure can save the delay and signaling overhead of SL DRX configuration.

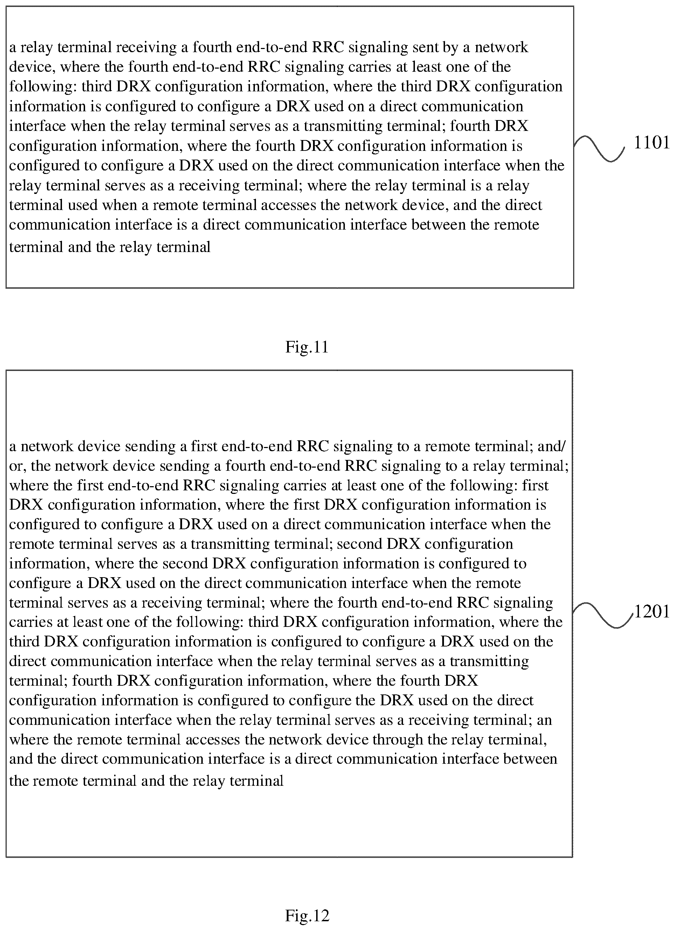

Fig. 11, an embodiment of the present disclosure further provides a method for configuring discontinuous reception of a direct communication interface in a relay scenario, including:
Step 1101: a relay terminal receiving a fourth end-to-end RRC signaling sent by a network device, where the fourth end-to-end RRC signaling carries at least one of the following:
third DRX configuration information, where the third DRX configuration information is configured to configure a DRX used on a direct communication interface when the relay terminal serves as a transmitting terminal;
fourth DRX configuration information, where the fourth DRX configuration information is configured to configure a DRX used on the direct communication interface when the relay terminal serves as a receiving terminal;
where the relay terminal is a relay terminal used when a remote terminal accesses the network device, and the direct communication interface is a direct communication interface between the remote terminal and the relay terminal.

In this way, according to the above step 1101, after the relay terminal receives the fourth end-to-end RRC signaling sent by the network device, if the fourth end-to-end RRC signaling includes the third DRX configuration information, the relay terminal can obtain the DRX configuration used on the direct communication interface when the relay terminal is used as a transmitting terminal; if the fourth end-to-end RRC signaling includes the fourth DRX configuration information, the relay terminal can obtain the DRX configuration used on the direct communication interface when the relay terminal is used as a receiving terminal, thereby achieving the purpose of power saving in the relay scenario.

Optionally, before the relay terminal receiving the fourth end-to-end RRC signaling sent by the network device, the method further includes:
the relay terminal receiving auxiliary information from the remote terminal via a PC5 interface RRC signaling;
the relay terminal sending the auxiliary information to the network device through a fifth end-to-end RRC signaling between the relay terminal and the network device;
where the auxiliary information is direct communication interface DRX configuration information expected by the remote terminal when the remote terminal serves as the receiving terminal.

Optionally, before the relay terminal receiving the fourth end-to-end RRC signaling sent by the network device, the method further includes:
the relay terminal sending the auxiliary information to the network device through a sixth end-to-end RRC signaling between the relay terminal and the network device;
where the auxiliary information is direct communication interface DRX configuration information expected by the relay terminal when the relay terminal serves as the receiving terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, after the relay terminal receiving the fourth end-to-end RRC signaling sent by the network device, the method further includes:
the relay terminal sending the third DRX configuration information to the relay terminal through a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

Optionally, before the relay terminal receiving the fourth end-to-end RRC signaling sent by the network device, the method further includes:
the relay terminal forwarding system information based on fifth DRX configuration information, where the fifth DRX configuration information is pre-configured; or
the relay device sending the system information via a direct communication interface broadcast message.

The method is implemented in conjunction with the above-mentioned direct communication interface discontinuous reception configuration method in the relay scenario executed by the remote terminal. The implementation method of the above-mentioned method embodiment is applicable to this method and can also achieve the same technical effect.

Fig. 12, an embodiment of the present disclosure provides a method for configuring discontinuous reception of a direct communication interface in a relay scenario, including:
Step 1201: a network device sending a first end-to-end RRC signaling to a remote terminal; and/or,
the network device sending a fourth end-to-end RRC signaling to a relay terminal;
where the first end-to-end RRC signaling carries at least one of the following:
first DRX configuration information, where the first DRX configuration information is configured to configure a DRX used on a direct communication interface when the remote terminal serves as a transmitting terminal;
second DRX configuration information, where the second DRX configuration information is configured to configure a DRX used on the direct communication interface when the remote terminal serves as a receiving terminal;
where the fourth end-to-end RRC signaling carries at least one of the following:
third DRX configuration information, where the third DRX configuration information is configured to configure a DRX used on the direct communication interface when the relay terminal serves as a transmitting terminal;
fourth DRX configuration information, where the fourth DRX configuration information is configured to configure the DRX used on the direct communication interface when the relay terminal serves as a receiving terminal; and
where the remote terminal accesses the network device through the relay terminal, and the direct communication interface is a direct communication interface between the remote terminal and the relay terminal.

According to the above step 1201, the network device sends a first end-to-end RRC signaling to a remote terminal; and/or sends a fourth end-to-end RRC signaling to a relay terminal; to achieve:

After the remote terminal receives the first RRC signaling sent by the network device, if the first end-to-end RRC signaling includes the first DRX configuration information, the remote terminal can obtain the DRX configuration used on the direct communication interface when the remote terminal serves as a transmitting terminal; if the first end-to-end RRC signaling includes the second DRX configuration information, the remote terminal can obtain the DRX configuration used on the direct communication interface when the remote terminal serves as a receiving terminal;

After the relay terminal receives the fourth RRC signaling sent by the network device, if the fourth end-to-end RRC signaling includes the third DRX configuration information, the relay terminal can obtain the DRX configuration used on the direct communication interface when the relay terminal serves as a transmitting terminal; if the fourth end-to-end RRC signaling includes the fourth DRX configuration information, the relay terminal can obtain the DRX configuration used on the direct communication interface when the relay terminal serves as a receiving terminal, thereby achieving the purpose of power saving in the relay scenario.

Optionally, before the network device sending the first end-to-end RRC signaling to the remote terminal, the method further includes:
the network device receiving auxiliary information which is sent by the remote terminal through a second end-to-end RRC signaling;
where the auxiliary information is sent after being obtained by the remote terminal from the relay terminal through a PC5 interface RRC signaling, and the auxiliary information is direct communication interface DRX configuration information expected by the relay terminal when the relay terminal serves as the receiving terminal.

Optionally, before the network device sending the first end-to-end RRC signaling to the remote terminal, the method further includes:
the network device receiving the auxiliary information which is sent by the remote terminal through a third end-to-end RRC signaling;
where the auxiliary information is direct communication interface DRX configuration information expected by the remote terminal when the remote terminal serves as the receiving terminal.

Optionally, before the network device sending the fourth end-to-end RRC signaling to the relay terminal, the method further includes:
the network device receiving the auxiliary information which is sent by the relay terminal through a fifth end-to-end RRC signaling;
where the auxiliary information is sent after being obtained by the relay terminal from the remote terminal through a PC5 interface RRC signaling, and the auxiliary information is the direct communication interface DRX configuration information expected by the remote terminal when the remote terminal serves as a receiving terminal.

Optionally, before the network device sending the fourth end-to-end RRC signaling to the relay terminal, the method further includes:
the network device receiving the auxiliary information which is sent by the relay terminal through a sixth end-to-end RRC signaling;
the auxiliary information is the direct communication interface DRX configuration information expected by the relay terminal when the relay terminal serves as a receiving terminal.

Optionally, the first DRX configuration information includes a DRX configuration of the direct communication interface between the remote terminal and the relay terminal for data transmission in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

The method is implemented in conjunction with the above-mentioned direct communication interface discontinuous reception configuration method in the relay scenario executed by the remote terminal and the relay terminal. The implementation method of the above-mentioned method embodiment is applicable to this method and can also achieve the same technical effect.

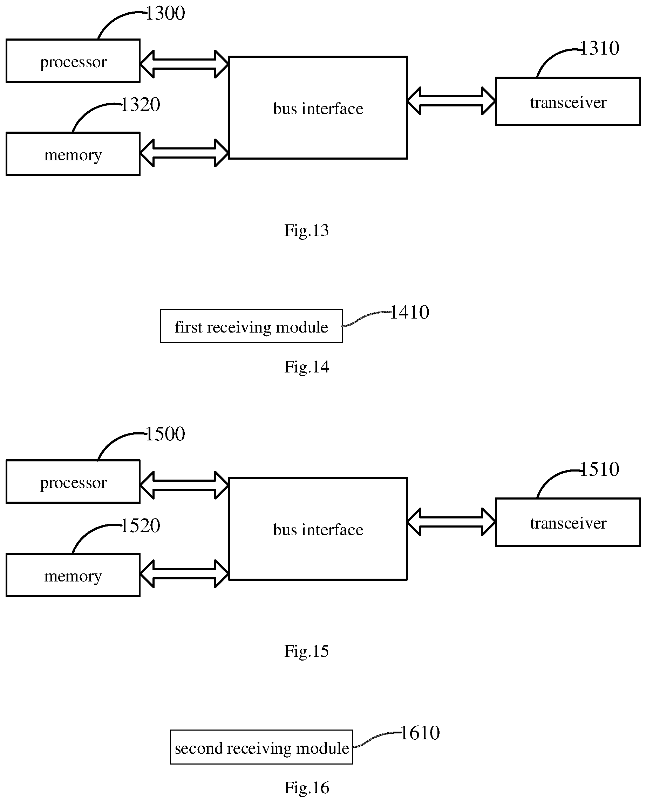

Fig. 13, the embodiment of the present disclosure further provides a remote terminal, including: a memory 1320, a transceiver 1310, and a processor 1300: the memory 1320 is configured to store program instructions; the transceiver 1310 is configured to send and receive data under the control of the processor 1300; the processor 1300 is configured to read the program instructions in the memory 1320; the transceiver 1310 is configured to perform the following operations:
receiving a first end-to-end Radio Resource Control (RRC) signaling sent by a network device, where the first end-to-end RRC signaling carries at least one of the following:
first discontinuous reception (DRX) configuration information, where the first DRX configuration information is configured to configure a DRX used on the direct communication interface when the remote terminal serves as a transmitting terminal;
second DRX configuration information, where the second DRX configuration information is configured to configure a DRX used on the direct communication interface when the remote terminal serves as a receiving terminal;
where the remote terminal accesses the network device through a relay terminal, and the direct communication interface is a direct communication interface between the remote terminal and the relay terminal.

Optionally, the transceiver is further configured to perform:
receiving auxiliary information from the relay terminal via a PC5 interface RRC signaling;
sending the auxiliary information to the network device through a second end-to-end RRC signaling between the remote terminal and the network device;
where the auxiliary information is direct communication interface DRX configuration information expected by the relay terminal when the relay terminal serves as the receiving terminal.

Optionally, the transceiver is further configured to perform:
sending auxiliary information to the network device through a third end-to-end RRC signaling between the remote terminal and the network device;
where the auxiliary information is direct communication interface DRX configuration information expected by the remote terminal when the remote terminal serves as the receiving terminal.

Optionally, the first DRX configuration information includes a DRX configuration for data transmission of the direct communication interface between the remote terminal and the relay terminal in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

Optionally, after the remote terminal receiving the first end-to-end radio resource control RRC signaling sent by the network device, the transceiver is further configured to perform:
when the remote terminal is a transmitting terminal and the first end-to-end RRC signaling carries the first DRX configuration information,
sending the first DRX configuration information to the relay terminal via a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

In Fig. 13, the bus architecture may include any number of interconnected buses and bridges, specifically one or more processors represented by processor 1300 and various circuits of memory represented by memory 1320 are linked together. The bus architecture may also link together various other circuits such as peripherals, voltage regulators, and power management circuits, which are well known in the art and are therefore not further described herein. The bus interface provides an interface. The transceiver 1310 may be a plurality of components, namely, a transmitter and a receiver, providing a unit for communicating with various other devices on a transmission medium, which transmission medium includes a wireless channel, a wired channel, an optical cable, and other transmission media. The processor 1300 is responsible for managing the bus architecture and general processing, and the memory 1320 may store data used by the processor 1310 when performing operations.

The processor 1300 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned remote terminal provided in the embodiment of the present disclosure can implement all the method steps implemented by the above-mentioned method embodiment executed by the remote terminal, and can achieve the same technical effect. The parts and beneficial effects of this embodiment that are the same as the method embodiment will not be described in detail here.

Fig. 14, the present disclosure also provides a remote terminal, including:
a first receiving module 1410, configured to receive a first end-to-end Radio Resource Control (RRC) signaling sent by a network device, where the first end-to-end RRC signaling carries at least one of the following:
first discontinuous reception (DRX) configuration information, where the first DRX configuration information is configured to configure a DRX used on the direct communication interface when the remote terminal serves as a transmitting terminal;
second DRX configuration information, where the second DRX configuration information is configured to configure a DRX used on the direct communication interface when the remote terminal serves as a receiving terminal;
where the remote terminal accesses the network device through a relay terminal, and the direct communication interface is a direct communication interface between the remote terminal and the relay terminal.

Optionally, the remote terminal further includes:
a third receiving module, configured to receive auxiliary information from the relay terminal via a PC5 interface RRC signaling;
a second sending module, configured to send the auxiliary information to the network device through a second end-to-end RRC signaling between the remote terminal and the network device;
where the auxiliary information is direct communication interface DRX configuration information expected by the relay terminal when the relay terminal serves as the receiving terminal.

Optionally, the remote terminal further includes:
a third sending module, configured to send auxiliary information to the network device through a third end-to-end RRC signaling between the remote terminal and the network device;
where the auxiliary information is direct communication interface DRX configuration information expected by the remote terminal when the remote terminal serves as the receiving terminal.

Optionally, the first DRX configuration information includes a DRX configuration for data transmission of the direct communication interface between the remote terminal and the relay terminal in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

Optionally, the remote terminal further includes:
a fourth sending module, configured to, when the remote terminal is a transmitting terminal and the first end-to-end RRC signaling carries the first DRX configuration information, send the first DRX configuration information to the relay terminal via a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

It should be noted here that the above-mentioned remote terminal provided in the embodiment of the present disclosure can implement all the method steps implemented by the above-mentioned method embodiment executed by the remote terminal, and can achieve the same technical effect. The parts and beneficial effects of this embodiment that are the same as the method embodiment will not be described in detail here.

In some embodiments of the present disclosure, a processor-readable storage medium is further provided, where the processor-readable storage medium stores program instructions, and the program instructions are used to enable the processor to execute the following steps:
a remote terminal receiving a first end-to-end Radio Resource Control (RRC) signaling sent by a network device, where the first end-to-end RRC signaling carries at least one of the following:
first discontinuous reception (DRX) configuration information, where the first DRX configuration information is configured to configure a DRX used on the direct communication interface when the remote terminal serves as a transmitting terminal;
second DRX configuration information, where the second DRX configuration information is configured to configure a DRX used on the direct communication interface when the remote terminal serves as a receiving terminal;
where the remote terminal accesses the network device through a relay terminal, and the direct communication interface is a direct communication interface between the remote terminal and the relay terminal.

Optionally, before the remote terminal receiving the first end-to-end radio resource control RRC signaling sent by the network device, the method further includes:
the remote terminal receiving auxiliary information from the relay terminal via a PC5 interface RRC signaling;
the remote terminal sending the auxiliary information to the network device through a second end-to-end RRC signaling between the remote terminal and the network device;
where the auxiliary information is direct communication interface DRX configuration information expected by the relay terminal when the relay terminal serves as the receiving terminal.

Optionally, before the remote terminal receiving the first end-to-end radio resource control RRC signaling sent by the network device, the method further includes:
the remote terminal sending auxiliary information to the network device through a third end-to-end RRC signaling between the remote terminal and the network device;
where the auxiliary information is direct communication interface DRX configuration information expected by the remote terminal when the remote terminal serves as the receiving terminal.

Optionally, the first DRX configuration information includes a DRX configuration for data transmission of the direct communication interface between the remote terminal and the relay terminal in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

Optionally, after the remote terminal receiving the first end-to-end radio resource control RRC signaling sent by the network device, the method further includes:
when the remote terminal is a transmitting terminal and the first end-to-end RRC signaling carries the first DRX configuration information,
the remote terminal sending the first DRX configuration information to the relay terminal via a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

When the program instructions are executed by the processor, all implementation methods of the above-mentioned direct communication interface discontinuous reception configuration method embodiment applied to the relay scenario as shown in Fig. 2 can be implemented. To avoid repetition, they will not be repeated here.

Fig. 15, the present disclosure also provides a relay terminal, including: a memory 1520, a transceiver 1510, and a processor 1500: the memory 1520 is configured to store program instructions; the transceiver 1510 is configured to send and receive data under the control of the processor 1500; the processor 1500 is configured to read the program instructions in the memory 1520, and the transceiver 1510 is configured to perform the following operations:
where the memory is configured to store program instructions; the transceiver is configured to transmit and receive data under a control of the processor; the processor is configured to read program instructions in the memory; and the transceiver is configured to perform:
receiving a fourth end-to-end RRC signaling sent by a network device, where the fourth end-to-end RRC signaling carries at least one of the following:
third DRX configuration information, where the third DRX configuration information is configured to configure a DRX used on a direct communication interface when the relay terminal serves as a transmitting terminal;
fourth DRX configuration information, where the fourth DRX configuration information is configured to configure a DRX used on the direct communication interface when the relay terminal serves as a receiving terminal;
where the relay terminal is a relay terminal used when a remote terminal accesses the network device, and the direct communication interface is a direct communication interface between the remote terminal and the relay terminal.

Optionally, the transceiver is further configured to perform:
receiving auxiliary information from the remote terminal via a PC5 interface RRC signaling;
sending the auxiliary information to the network device through a fifth end-to-end RRC signaling between the relay terminal and the network device;
where the auxiliary information is direct communication interface DRX configuration information expected by the remote terminal when the remote terminal serves as the receiving terminal.

Optionally, the transceiver is further configured to perform:
sending the auxiliary information to the network device through a sixth end-to-end RRC signaling between the relay terminal and the network device;
where the auxiliary information is direct communication interface DRX configuration information expected by the relay terminal when the relay terminal serves as the receiving terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, where the transceiver is further configured to perform:
sending the third DRX configuration information to the relay terminal through a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

Optionally, the transceiver is further configured to perform:
forwarding system information based on fifth DRX configuration information, where the fifth DRX configuration information is pre-configured; or
sending the system information via a direct communication interface broadcast message.

In Fig. 15, the bus architecture may include any number of interconnected buses and bridges, specifically one or more processors represented by processor 1510 and various circuits of memory represented by memory 1520 are linked together. The bus architecture may also link together various other circuits such as peripherals, voltage regulators, and power management circuits, which are well known in the art and are therefore not further described herein. The bus interface provides an interface. The transceiver 1500 may be a plurality of components, namely, a transmitter and a receiver, providing a unit for communicating with various other devices on a transmission medium, which transmission medium includes a wireless channel, a wired channel, an optical cable, and other transmission media. The processor 1510 is responsible for managing the bus architecture and general processing, and the memory 1520 may store data used by the processor 1510 when performing operations.

The processor 1510 may be a central processing unit (CPU), an application specific integrated circuit (ASIC), a field programmable gate array (FPGA) or a complex programmable logic device (CPLD). The processor may also adopt a multi-core architecture.

The processor 1500 calls the program instructions stored in the memory to execute any of the methods provided in the embodiments of the present disclosure according to the obtained executable instructions. The processor 1500 and the memory 1520 can also be arranged physically separately.

It should be noted here that the above-mentioned relay terminal provided in the embodiment of the present disclosure can implement all the method steps implemented by the above-mentioned method embodiment executed by the relay terminal, and can achieve the same technical effect. The parts and beneficial effects of this embodiment that are the same as the method embodiment will not be described in detail here.

Fig. 16, the present disclosure also provides a relay terminal, including:
a second receiving module, configured to receive a fourth end-to-end RRC signaling sent by a network device, where the fourth end-to-end RRC signaling carries at least one of the following:
third DRX configuration information, where the third DRX configuration information is configured to configure a DRX used on a direct communication interface when the relay terminal serves as a transmitting terminal;
fourth DRX configuration information, where the fourth DRX configuration information is configured to configure a DRX used on the direct communication interface when the relay terminal serves as a receiving terminal;
where the relay terminal is a relay terminal used when a remote terminal accesses the network device, and the direct communication interface is a direct communication interface between the remote terminal and the relay terminal.

Optionally, the relay terminal further includes:
a fourth receiving module, configured to receive auxiliary information from the remote terminal via a PC5 interface RRC signaling;
a fifth sending module, configured to send the auxiliary information to the network device through a fifth end-to-end RRC signaling between the relay terminal and the network device;
where the auxiliary information is direct communication interface DRX configuration information expected by the remote terminal when the remote terminal serves as the receiving terminal.

Optionally, the relay terminal further includes:
a sixth sending module, configured to send the auxiliary information to the network device through a sixth end-to-end RRC signaling between the relay terminal and the network device;
where the auxiliary information is direct communication interface DRX configuration information expected by the relay terminal when the relay terminal serves as the receiving terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, the relay terminal further includes:
a seventh sending module, configured to send the third DRX configuration information to the relay terminal through a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

Optionally, the relay terminal further includes:
an eighth sending module, configured to:
forward system information based on fifth DRX configuration information, where the fifth DRX configuration information is pre-configured; or
send the system information via a direct communication interface broadcast message..

It should be noted here that the above-mentioned relay terminal provided in the embodiment of the present disclosure can implement all the method steps implemented by the above-mentioned method embodiment executed by the relay terminal, and can achieve the same technical effect. The parts and beneficial effects of this embodiment that are the same as the method embodiment will not be described in detail here.

In some embodiments of the present disclosure, a processor-readable storage medium is further provided, where the processor-readable storage medium stores program instructions, and the program instructions are used to enable the processor to execute the following steps:
a relay terminal receiving a fourth end-to-end RRC signaling sent by a network device, where the fourth end-to-end RRC signaling carries at least one of the following:
third DRX configuration information, where the third DRX configuration information is configured to configure a DRX used on a direct communication interface when the relay terminal serves as a transmitting terminal;
fourth DRX configuration information, where the fourth DRX configuration information is configured to configure a DRX used on the direct communication interface when the relay terminal serves as a receiving terminal;
where the relay terminal is a relay terminal used when a remote terminal accesses the network device, and the direct communication interface is a direct communication interface between the remote terminal and the relay terminal.

Optionally, before the relay terminal receiving the fourth end-to-end RRC signaling sent by the network device, the method further includes:
the relay terminal receiving auxiliary information from the remote terminal via a PC5 interface RRC signaling;
the relay terminal sending the auxiliary information to the network device through a fifth end-to-end RRC signaling between the relay terminal and the network device;
where the auxiliary information is direct communication interface DRX configuration information expected by the remote terminal when the remote terminal serves as the receiving terminal.

Optionally, before the relay terminal receiving the fourth end-to-end RRC signaling sent by the network device, the method further includes:
the relay terminal sending the auxiliary information to the network device through a sixth end-to-end RRC signaling between the relay terminal and the network device;
where the auxiliary information is direct communication interface DRX configuration information expected by the relay terminal when the relay terminal serves as the receiving terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, after the relay terminal receiving the fourth end-to-end RRC signaling sent by the network device, the method further includes:
the relay terminal sending the third DRX configuration information to the relay terminal through a PC5 interface RRC signaling.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

Optionally, before the relay terminal receiving the fourth end-to-end RRC signaling sent by the network device, the method further includes:
the relay terminal forwarding system information based on fifth DRX configuration information, where the fifth DRX configuration information is pre-configured; or
the relay device sending the system information via a direct communication interface broadcast message.

All implementation methods of the method embodiment applied to the relay terminal side as shown in Fig. 11 can be implemented. To avoid repetition, they will not be repeated here.

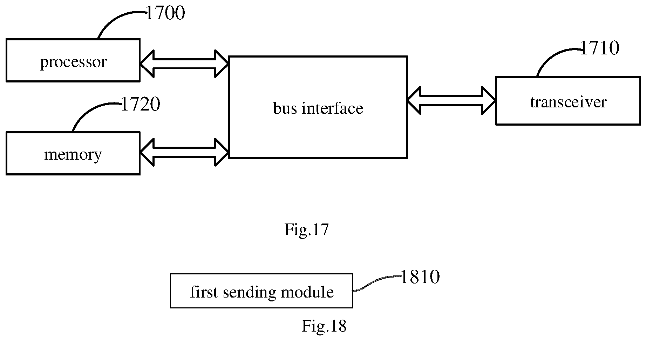

Fig. 17, the present disclosure also provides a network device, including: a memory 1720, a transceiver 1710, and a processor 1700: the memory 1720 is configured to store program instructions; the transceiver 1710 is configured to send and receive data under the control of the processor 1700; the processor 1700 is configured to read the program instructions in the memory 1720, and the transceiver 1710 is configured to perform the following operations:
sending a first end-to-end RRC signaling to a remote terminal; and/or,
sending a fourth end-to-end RRC signaling to a relay terminal;
where the first end-to-end RRC signaling carries at least one of the following:
   first DRX configuration information, where the first DRX configuration information is configured to configure a DRX used on a direct communication interface when the remote terminal serves as a transmitting terminal;
   second DRX configuration information, where the second DRX configuration information is configured to configure a DRX used on the direct communication interface when the remote terminal serves as a receiving terminal;
   where the fourth end-to-end RRC signaling carries at least one of the following:
      third DRX configuration information, where the third DRX configuration information is configured to configure a DRX used on the direct communication interface when the relay terminal serves as a transmitting terminal;
      fourth DRX configuration information, where the fourth DRX configuration information is configured to configure the DRX used on the direct communication interface when the relay terminal serves as a receiving terminal; and
      where the remote terminal accesses the network device through the relay terminal, and the direct communication interface is a direct communication interface between the remote terminal and the relay terminal.

Optionally, the transceiver is further configured to perform:
receiving auxiliary information which is sent by the remote terminal through a second end-to-end RRC signaling;
where the auxiliary information is sent after being obtained by the remote terminal from the relay terminal through a PC5 interface RRC signaling, and the auxiliary information is direct communication interface DRX configuration information expected by the relay terminal when the relay terminal serves as the receiving terminal.

Optionally, the transceiver is further configured to perform:
receiving the auxiliary information which is sent by the remote terminal through a third end-to-end RRC signaling;
where the auxiliary information is direct communication interface DRX configuration information expected by the remote terminal when the remote terminal serves as the receiving terminal.

Optionally, the transceiver is further configured to perform:
receiving the auxiliary information which is sent by the relay terminal through a fifth end-to-end RRC signaling;
where the auxiliary information is sent after being obtained by the relay terminal from the remote terminal through a PC5 interface RRC signaling, and the auxiliary information is the direct communication interface DRX configuration information expected by the remote terminal when the remote terminal serves as a receiving terminal.

Optionally, the transceiver is further configured to perform:
receiving the auxiliary information which is sent by the relay terminal through a sixth end-to-end RRC signaling;
the auxiliary information is the direct communication interface DRX configuration information expected by the relay terminal when the relay terminal serves as a receiving terminal.

Optionally, the first DRX configuration information includes a DRX configuration of the direct communication interface between the remote terminal and the relay terminal for data transmission in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

Among them, in Fig. 17, the bus architecture can include any number of interconnected buses and bridges, specifically one or more processors represented by processor 1710 and various circuits of memory represented by memory 1720 are linked together. The bus architecture can also link various other circuits such as peripherals, regulators, and power management circuits together, which are all well known in the art, so they are not further described herein. The bus interface provides an interface. The transceiver 1700 can be a plurality of components, that is, including a transmitter and a receiver, providing a unit for communicating with various other devices on a transmission medium, and these transmission media include transmission media such as wireless channels, wired channels, and optical cables. The processor 1710 is responsible for managing the bus architecture and general processing, and the memory 1720 can store data used by the processor 1710 when performing operations.

The processor 1710 may be a central processing unit (CPU), an application specific integrated circuit (ASIC), a field programmable gate array (FPGA) or a complex programmable logic device (CPLD). The processor may also adopt a multi-core architecture.

The processor 1700 calls the program instructions stored in the memory to execute any of the methods provided in the embodiments of the present disclosure according to the obtained executable instructions. The processor 1700 and the memory 1720 can also be arranged physically separately.

It should be noted here that the above-mentioned network device provided in the embodiment of the present disclosure can implement all the method steps implemented by the above-mentioned method embodiment performed by the network device, and can achieve the same technical effect. The parts and beneficial effects of this embodiment that are the same as the method embodiment will not be described in detail here.

In Fig. 18, the embodiment of the present disclosure further provides a network device, including:
a first sending module 1810, configured to a send a first end-to-end RRC signaling to a remote terminal; and/or, sending a fourth end-to-end RRC signaling to a relay terminal;
where the first end-to-end RRC signaling carries at least one of the following:
   first DRX configuration information, where the first DRX configuration information is configured to configure a DRX used on a direct communication interface when the remote terminal serves as a transmitting terminal;
   second DRX configuration information, where the second DRX configuration information is configured to configure a DRX used on the direct communication interface when the remote terminal serves as a receiving terminal;
   where the fourth end-to-end RRC signaling carries at least one of the following:
      third DRX configuration information, where the third DRX configuration information is configured to configure a DRX used on the direct communication interface when the relay terminal serves as a transmitting terminal;
      fourth DRX configuration information, where the fourth DRX configuration information is configured to configure the DRX used on the direct communication interface when the relay terminal serves as a receiving terminal; and
      where the remote terminal accesses the network device through the relay terminal, and the direct communication interface is a direct communication interface between the remote terminal and the relay terminal.

Optionally, the network device further includes:
a fifth receiving module, configured to receive auxiliary information which is sent by the remote terminal through a second end-to-end RRC signaling;
where the auxiliary information is sent after being obtained by the remote terminal from the relay terminal through a PC5 interface RRC signaling, and the auxiliary information is direct communication interface DRX configuration information expected by the relay terminal when the relay terminal serves as the receiving terminal.

Optionally, the network device further includes:
a sixth receiving module, configured to receive the auxiliary information which is sent by the remote terminal through a third end-to-end RRC signaling;
where the auxiliary information is direct communication interface DRX configuration information expected by the remote terminal when the remote terminal serves as the receiving terminal.

Optionally, the network device further includes:
a seventh receiving module, configured to receive the auxiliary information which is sent by the relay terminal through a fifth end-to-end RRC signaling;
where the auxiliary information is sent after being obtained by the relay terminal from the remote terminal through a PC5 interface RRC signaling, and the auxiliary information is the direct communication interface DRX configuration information expected by the remote terminal when the remote terminal serves as a receiving terminal.

Optionally, the network device further includes:
an eighth receiving module, configured to receive the auxiliary information which is sent by the relay terminal through a sixth end-to-end RRC signaling;
the auxiliary information is the direct communication interface DRX configuration information expected by the relay terminal when the relay terminal serves as a receiving terminal.

Optionally, the first DRX configuration information includes a DRX configuration of the direct communication interface between the remote terminal and the relay terminal for data transmission in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

It should be noted here that the above-mentioned network device provided in the embodiment of the present disclosure can implement all the method steps implemented by the above-mentioned method embodiment performed by the network device, and can achieve the same technical effect. The parts and beneficial effects of this embodiment that are the same as the method embodiment will not be described in detail here.

In some embodiments of the present disclosure, a processor-readable storage medium is further provided, where the processor-readable storage medium stores program instructions, and the program instructions are used to enable the processor to execute the following steps:
a network device sending a first end-to-end RRC signaling to a remote terminal; and/or,
the network device sending a fourth end-to-end RRC signaling to a relay terminal;
where the first end-to-end RRC signaling carries at least one of the following:
   first DRX configuration information, where the first DRX configuration information is configured to configure a DRX used on a direct communication interface when the remote terminal serves as a transmitting terminal;
   second DRX configuration information, where the second DRX configuration information is configured to configure a DRX used on the direct communication interface when the remote terminal serves as a receiving terminal;
   where the fourth end-to-end RRC signaling carries at least one of the following:
      third DRX configuration information, where the third DRX configuration information is configured to configure a DRX used on the direct communication interface when the relay terminal serves as a transmitting terminal;
      fourth DRX configuration information, where the fourth DRX configuration information is configured to configure the DRX used on the direct communication interface when the relay terminal serves as a receiving terminal; and
      where the remote terminal accesses the network device through the relay terminal, and the direct communication interface is a direct communication interface between the remote terminal and the relay terminal.

Optionally, before the network device sending the first end-to-end RRC signaling to the remote terminal, the method further includes:
the network device receiving auxiliary information which is sent by the remote terminal through a second end-to-end RRC signaling;
where the auxiliary information is sent after being obtained by the remote terminal from the relay terminal through a PC5 interface RRC signaling, and the auxiliary information is direct communication interface DRX configuration information expected by the relay terminal when the relay terminal serves as the receiving terminal.

Optionally, before the network device sending the first end-to-end RRC signaling to the remote terminal, the method further includes:
the network device receiving the auxiliary information which is sent by the remote terminal through a third end-to-end RRC signaling;
where the auxiliary information is direct communication interface DRX configuration information expected by the remote terminal when the remote terminal serves as the receiving terminal.

Optionally, before the network device sending the fourth end-to-end RRC signaling to the relay terminal, the method further includes:
the network device receiving the auxiliary information which is sent by the relay terminal through a fifth end-to-end RRC signaling;
where the auxiliary information is sent after being obtained by the relay terminal from the remote terminal through a PC5 interface RRC signaling, and the auxiliary information is the direct communication interface DRX configuration information expected by the remote terminal when the remote terminal serves as a receiving terminal.

Optionally, before the network device sending the fourth end-to-end RRC signaling to the relay terminal, the method further includes:
the network device receiving the auxiliary information which is sent by the relay terminal through a sixth end-to-end RRC signaling;
the auxiliary information is the direct communication interface DRX configuration information expected by the relay terminal when the relay terminal serves as a receiving terminal.

Optionally, the first DRX configuration information includes a DRX configuration of the direct communication interface between the remote terminal and the relay terminal for data transmission in an uplink transmission direction.

Optionally, the second DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the third DRX configuration information includes at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

Optionally, the fourth DRX configuration information includes a DRX configuration of the direct communication interface between the remote terminal and the relay terminal for data transmission in an uplink transmission direction.

Optionally, a granularity of the auxiliary information includes at least one of the following:
a direct communication interface source address;
a direct communication interface target address; and
a cast type.

Optionally, the auxiliary information includes one or more pieces of configuration information, and the configuration information includes at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

All implementation methods of the method embodiment applied to the network device side as shown in Fig. 12 can be implemented. To avoid repetition, they will not be repeated here.

It should be noted that the division of modules in the embodiments of the present disclosure is schematic and is only a logical function division. There may be other division methods in actual implementation. In addition, each functional module in each embodiment of the present disclosure may be integrated into a processing module, or each module may exist physically separately, or two or more modules may be integrated into one module. The above-mentioned integrated modules may be implemented in the form of hardware or in the form of software functional modules.

If the integrated module is implemented in the form of a software function module and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (Read-Only Memory, ROM), random access memory (Random Access Memory, RAM), disk or optical disk and other media that can store program codes.

The solution provided in the embodiment of the present disclosure can be applied to a variety of systems, especially the fifth generation mobile communication technology (5th Generation Mobile Communication Technology, 5G) system. For example, the applicable system may be a global system of mobile communication (Global System of Mobile communication, GSM) system, a code division multiple access (Code Division Multiple Access, CDMA) system, a wideband code division multiple access (WCDMA) general packet radio service (General Packet Radio Service, GPRS) system, a long term evolution (Long Term Evolution, LTE) system, a LTE frequency division duplex (Frequency Division Duplex, FDD) system, a LTE time division duplex (Time Division Duplex, TDD) system, an advanced long term evolution (Long Term Evolution Advanced, LTE-A) system, a universal mobile telecommunication system (Universal Mobile Telecommunication System, UMTS), a world-wide interoperability for Microwave Access (Worldwide interoperability for Microwave Access, WiMAX) system, a 5G new radio (New Radio, NR) system, etc. These systems include terminal equipment and network device. The system may also include core network parts, such as Evolved Packet System (EPS), 5G System (5G System, 5GS), etc.

The terminal device involved in the embodiment of the present disclosure may be a device that provides voice and/or data connectivity to a user, a handheld device with a wireless connection function, or other processing devices connected to a wireless modem. In different systems, the name of the terminal device may also be different. For example, in a 5G system, the terminal device may be called a user equipment (UE). The wireless terminal device can communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDA) and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, which is not limited in the embodiments of the present disclosure.

The network device involved in the embodiments of the present disclosure may be a base station, which may include multiple cells providing services to the terminal. Depending on the specific application scenario, the base station may also be called an access point, or may be a device in the access network that communicates with the wireless terminal device through one or more sectors on the air interface, or other names. The network device may be used to interchange received air frames with Internet Protocol (IP) packets, and serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (Global System for Mobile communications, GSM) or Code Division Multiple Access (Code Division Multiple Access, CDMA), or a network device (NodeB) in Wide-band Code Division Multiple Access (WCDMA), or an evolved network device (evolutional Node B, eNB or e-NodeB) in the Long Term Evolution (Long Term Evolution, LTE) system, a 5G base station (gNB) in the 5G network architecture (next generation system), or a Home evolved Node B (Home evolved Node B, HeNB), a relay node (relay node), a home base station (femto), a pico base station (pico), etc., which is not limited in the embodiments of the present disclosure. In some network structures, the network devices may include centralized unit (CU) nodes and distributed unit (DU) nodes, and the centralized unit and the distributed unit may also be arranged geographically separately.

Network devices and terminal devices can each use one or more antennas for multi-input multi-output (MIMO) transmission. MIMO transmission can be single-user MIMO (SU-MIMO) or multi-user MIMO (MU-MIMO). Depending on the form and number of antenna combinations, MIMO transmission can be two-dimensional antennas (2Dimission MIMO, 2D-MIMO), three-dimensional antennas (3Dimission MIMO, 3D-MIMO), full-dimensional multi-input multi-output technology (Full Dimension Multi-Input-Multi-Output, FD-MIMO) or massive antennas (massive-MIMO), or it can be diversity transmission, precoding transmission, or beamforming transmission, etc.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Moreover, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to generate a machine, so that the instructions executed by the processor of the computer or other programmable data processing device generate a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more microprocessors (DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules may be integrated together and implemented in the form of a system-on-a-chip (SOC).

The present disclosure are used to distinguish similar objects, and are not necessarily used to describe a specific order or sequential order. It should be understood that the data used in this way can be interchanged in appropriate circumstances, so that the embodiments of the present disclosure described here, such as the order implementation except those illustrated or described here. In addition, the terms "including" and "having" and any of their variations are intended to cover non-exclusive inclusions, such as, the process, method, system, product or equipment including a series of steps or units need not be limited to those steps or units clearly listed, but may include other steps or units that are not clearly listed or inherent to these processes, methods, products or equipment. In addition, "and/or" is used in the specification and claims to represent at least one of the connected objects, such as A and/or B and/or C, indicating that A alone, B alone, C alone, and A and B all exist, B and C all exist, A and C all exist, and 7 situations where A, B and C all exist. Similarly, the use of " at least one of A and B " in this specification and claims should be understood as " A alone, B alone, or both A and B are present."

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A method for configuring discontinuous reception of a direct communication interface in a relay scenario, comprising:
a remote terminal receiving a first end-to-end Radio Resource Control (RRC) signaling sent by a network device, wherein the first end-to-end RRC signaling carries at least one of the following:
first discontinuous reception (DRX) configuration information, wherein the first DRX configuration information is configured to configure a DRX used on the direct communication interface when the remote terminal serves as a transmitting terminal;
second DRX configuration information, wherein the second DRX configuration information is configured to configure a DRX used on the direct communication interface when the remote terminal serves as a receiving terminal;
wherein the remote terminal accesses the network device through a relay terminal, and the direct communication interface is a direct communication interface between the remote terminal and the relay terminal.

2. The method according to claim 1, wherein before the remote terminal receiving the first end-to-end radio resource control RRC signaling sent by the network device, the method further comprises:
the remote terminal receiving auxiliary information from the relay terminal via a PC5 interface RRC signaling;
the remote terminal sending the auxiliary information to the network device through a second end-to-end RRC signaling between the remote terminal and the network device;
wherein the auxiliary information is direct communication interface DRX configuration information expected by the relay terminal when the relay terminal serves as the receiving terminal.

3. The method according to claim 1, wherein before the remote terminal receiving the first end-to-end radio resource control RRC signaling sent by the network device, the method further comprises:
the remote terminal sending auxiliary information to the network device through a third end-to-end RRC signaling between the remote terminal and the network device;
wherein the auxiliary information is direct communication interface DRX configuration information expected by the remote terminal when the remote terminal serves as the receiving terminal.

4. The method according to claim 1, wherein the first DRX configuration information comprises a DRX configuration for data transmission of the direct communication interface between the remote terminal and the relay terminal in an uplink transmission direction.

5. The method according to claim 1, wherein the second DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

6. The method according to claim 1, wherein after the remote terminal receiving the first end-to-end radio resource control RRC signaling sent by the network device, the method further comprises:
when the remote terminal is a transmitting terminal and the first end-to-end RRC signaling carries the first DRX configuration information,
the remote terminal sending the first DRX configuration information to the relay terminal via a PC5 interface RRC signaling.

7. The method according to claim 2 or 3, wherein a granularity of the auxiliary information comprises at least one of the following:
a direct communication interface source address;
a direct communication interface target address; and
a cast type.

8. The method according to claim 2 or 3, wherein the auxiliary information comprises one or more pieces of configuration information, and the configuration information comprises at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

9. A method for configuring discontinuous reception of a direct communication interface in a relay scenario, comprising:
a relay terminal receiving a fourth end-to-end RRC signaling sent by a network device, wherein the fourth end-to-end RRC signaling carries at least one of the following:
third DRX configuration information, wherein the third DRX configuration information is configured to configure a DRX used on a direct communication interface when the relay terminal serves as a transmitting terminal;
fourth DRX configuration information, wherein the fourth DRX configuration information is configured to configure a DRX used on the direct communication interface when the relay terminal serves as a receiving terminal;
wherein the relay terminal is a relay terminal used when a remote terminal accesses the network device, and the direct communication interface is a direct communication interface between the remote terminal and the relay terminal.

10. The method according to claim 9, wherein before the relay terminal receiving the fourth end-to-end RRC signaling sent by the network device, the method further comprises:
the relay terminal receiving auxiliary information from the remote terminal via a PC5 interface RRC signaling;
the relay terminal sending the auxiliary information to the network device through a fifth end-to-end RRC signaling between the relay terminal and the network device;
wherein the auxiliary information is direct communication interface DRX configuration information expected by the remote terminal when the remote terminal serves as the receiving terminal.

11. The method according to claim 9, wherein before the relay terminal receiving the fourth end-to-end RRC signaling sent by the network device, the method further comprises:
the relay terminal sending the auxiliary information to the network device through a sixth end-to-end RRC signaling between the relay terminal and the network device;
wherein the auxiliary information is direct communication interface DRX configuration information expected by the relay terminal when the relay terminal serves as the receiving terminal.

12. The method according to claim 9, wherein the third DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

13. The method according to claim 9, wherein the fourth DRX configuration information comprises a DRX configuration of the direct communication interface between the remote terminal and the relay terminal for data transmission in an uplink transmission direction.

14. The method according to claim 9, wherein after the relay terminal receiving the fourth end-to-end RRC signaling sent by the network device, the method further comprises:
the relay terminal sending the third DRX configuration information to the relay terminal through a PC5 interface RRC signaling.

15. The method according to claim 10 or 11, wherein a granularity of the auxiliary information comprises at least one of the following:
a direct communication interface source address;
a direct communication interface target address; and
a cast type.

16. The method according to claim 10 or 11, wherein the auxiliary information comprises one or more pieces of configuration information, and the configuration information comprises at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

17. The method according to claim 9, wherein before the relay terminal receiving the fourth end-to-end RRC signaling sent by the network device, the method further comprises:
the relay terminal forwarding system information based on fifth DRX configuration information, wherein the fifth DRX configuration information is pre-configured; or
the relay device sending the system information via a direct communication interface broadcast message.

18. A method for configuring discontinuous reception of a direct communication interface in a relay scenario, comprising:
a network device sending a first end-to-end RRC signaling to a remote terminal; and/or,
the network device sending a fourth end-to-end RRC signaling to a relay terminal;
wherein the first end-to-end RRC signaling carries at least one of the following:
first DRX configuration information, wherein the first DRX configuration information is configured to configure a DRX used on a direct communication interface when the remote terminal serves as a transmitting terminal;
second DRX configuration information, wherein the second DRX configuration information is configured to configure a DRX used on the direct communication interface when the remote terminal serves as a receiving terminal;
wherein the fourth end-to-end RRC signaling carries at least one of the following:
third DRX configuration information, wherein the third DRX configuration information is configured to configure a DRX used on the direct communication interface when the relay terminal serves as a transmitting terminal;
fourth DRX configuration information, wherein the fourth DRX configuration information is configured to configure the DRX used on the direct communication interface when the relay terminal serves as a receiving terminal; and
wherein the remote terminal accesses the network device through the relay terminal, and the direct communication interface is a direct communication interface between the remote terminal and the relay terminal.

19. The method according to claim 18, wherein before the network device sending the first end-to-end RRC signaling to the remote terminal, the method further comprises:
the network device receiving auxiliary information which is sent by the remote terminal through a second end-to-end RRC signaling;
wherein the auxiliary information is sent after being obtained by the remote terminal from the relay terminal through a PC5 interface RRC signaling, and the auxiliary information is direct communication interface DRX configuration information expected by the relay terminal when the relay terminal serves as the receiving terminal.

20. The method according to claim 18, wherein before the network device sending the first end-to-end RRC signaling to the remote terminal, the method further comprises:
the network device receiving the auxiliary information which is sent by the remote terminal through a third end-to-end RRC signaling;
wherein the auxiliary information is direct communication interface DRX configuration information expected by the remote terminal when the remote terminal serves as the receiving terminal.

21. The method according to claim 19, wherein before the network device sending the fourth end-to-end RRC signaling to the relay terminal, the method further comprises:
the network device receiving the auxiliary information which is sent by the relay terminal through a fifth end-to-end RRC signaling;
wherein the auxiliary information is sent after being obtained by the relay terminal from the remote terminal through a PC5 interface RRC signaling, and the auxiliary information is the direct communication interface DRX configuration information expected by the remote terminal when the remote terminal serves as a receiving terminal.

22. The method according to claim 19, wherein before the network device sending the fourth end-to-end RRC signaling to the relay terminal, the method further comprises:
the network device receiving the auxiliary information which is sent by the relay terminal through a sixth end-to-end RRC signaling;
the auxiliary information is the direct communication interface DRX configuration information expected by the relay terminal when the relay terminal serves as a receiving terminal.

23. The method according to claim 18, wherein the first DRX configuration information comprises a DRX configuration of the direct communication interface between the remote terminal and the relay terminal for data transmission in an uplink transmission direction.

24. The method according to claim 18, wherein the second DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

25. The method according to claim 18, wherein the third DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

26. The method according to claim 18, wherein the fourth DRX configuration information comprises a DRX configuration of the direct communication interface between the remote terminal and the relay terminal for data transmission in an uplink transmission direction.

27. The method according to any one of claims 19 to 22, wherein a granularity of the auxiliary information comprises at least one of the following:
a direct communication interface source address;
a direct communication interface target address; and
a cast type.

28. The method according to any one of claims 19 to 22, wherein the auxiliary information comprises one or more pieces of configuration information, and the configuration information comprises at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

29. A remote terminal, comprising: a memory, a transceiver, and a processor;
wherein the memory is configured to store program instructions; the transceiver is configured to transmit and receive data under a control of the processor; the processor is configured to read program instructions in the memory; and the transceiver is configured to perform:
receiving a first end-to-end Radio Resource Control (RRC) signaling sent by a network device, wherein the first end-to-end RRC signaling carries at least one of the following:
first discontinuous reception (DRX) configuration information, wherein the first DRX configuration information is configured to configure a DRX used on the direct communication interface when the remote terminal serves as a transmitting terminal;
second DRX configuration information, wherein the second DRX configuration information is configured to configure a DRX used on the direct communication interface when the remote terminal serves as a receiving terminal;
wherein the remote terminal accesses the network device through a relay terminal, and the direct communication interface is a direct communication interface between the remote terminal and the relay terminal.

30. The remote terminal according to claim 29, wherein the transceiver is further configured to perform:
receiving auxiliary information from the relay terminal via a PC5 interface RRC signaling;
sending the auxiliary information to the network device through a second end-to-end RRC signaling between the remote terminal and the network device;
wherein the auxiliary information is direct communication interface DRX configuration information expected by the relay terminal when the relay terminal serves as the receiving terminal.

31. The remote terminal according to claim 29, wherein the transceiver is further configured to perform:
sending auxiliary information to the network device through a third end-to-end RRC signaling between the remote terminal and the network device;
wherein the auxiliary information is direct communication interface DRX configuration information expected by the remote terminal when the remote terminal serves as the receiving terminal.

32. The remote terminal according to claim 29, wherein the first DRX configuration information comprises a DRX configuration for data transmission of the direct communication interface between the remote terminal and the relay terminal in an uplink transmission direction.

33. The remote terminal according to claim 29, wherein the second DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

34. The remote terminal according to claim 29, wherein after the remote terminal receiving the first end-to-end radio resource control RRC signaling sent by the network device, the transceiver is further configured to perform:
when the remote terminal is a transmitting terminal and the first end-to-end RRC signaling carries the first DRX configuration information,
sending the first DRX configuration information to the relay terminal via a PC5 interface RRC signaling.

35. The remote terminal according to claim 30 or 31, wherein a granularity of the auxiliary information comprises at least one of the following:
a direct communication interface source address;
a direct communication interface target address; and
a cast type.

36. The remote terminal according to claim 30 or 31, wherein the auxiliary information comprises one or more pieces of configuration information, and the configuration information comprises at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

37. A remote terminal, comprising:
a first receiving module, configured to receive a first end-to-end Radio Resource Control (RRC) signaling sent by a network device, wherein the first end-to-end RRC signaling carries at least one of the following:
first discontinuous reception (DRX) configuration information, wherein the first DRX configuration information is configured to configure a DRX used on the direct communication interface when the remote terminal serves as a transmitting terminal;
second DRX configuration information, wherein the second DRX configuration information is configured to configure a DRX used on the direct communication interface when the remote terminal serves as a receiving terminal;
wherein the remote terminal accesses the network device through a relay terminal, and the direct communication interface is a direct communication interface between the remote terminal and the relay terminal.

38. The remote terminal according to claim 37, further comprising:
a third receiving module, configured to receive auxiliary information from the relay terminal via a PC5 interface RRC signaling;
a second sending module, configured to send the auxiliary information to the network device through a second end-to-end RRC signaling between the remote terminal and the network device;
wherein the auxiliary information is direct communication interface DRX configuration information expected by the relay terminal when the relay terminal serves as the receiving terminal.

39. The remote terminal according to claim 37, wherein further comprising:
a third sending module, configured to send auxiliary information to the network device through a third end-to-end RRC signaling between the remote terminal and the network device;
wherein the auxiliary information is direct communication interface DRX configuration information expected by the remote terminal when the remote terminal serves as the receiving terminal.

40. The remote terminal according to claim 37, wherein the first DRX configuration information comprises a DRX configuration for data transmission of the direct communication interface between the remote terminal and the relay terminal in an uplink transmission direction.

41. The remote terminal according to claim 37, wherein the second DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal in a downlink transmission direction.

42. The remote terminal according to claim 37, wherein further comprising:
a fourth sending module, configured to, when the remote terminal is a transmitting terminal and the first end-to-end RRC signaling carries the first DRX configuration information, send the first DRX configuration information to the relay terminal via a PC5 interface RRC signaling.

43. The remote terminal according to claim 38 or 39, wherein a granularity of the auxiliary information comprises at least one of the following:
a direct communication interface source address;
a direct communication interface target address; and
a cast type.

44. The remote terminal according to claim 38 or 39, wherein the auxiliary information comprises one or more pieces of configuration information, and the configuration information comprises at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

45. A relay terminal, comprising: a memory, a transceiver, and a processor;
wherein the memory is configured to store program instructions; the transceiver is configured to transmit and receive data under a control of the processor; the processor is configured to read program instructions in the memory; and the transceiver is configured to perform:
receiving a fourth end-to-end RRC signaling sent by a network device, wherein the fourth end-to-end RRC signaling carries at least one of the following:
third DRX configuration information, wherein the third DRX configuration information is configured to configure a DRX used on a direct communication interface when the relay terminal serves as a transmitting terminal;
fourth DRX configuration information, wherein the fourth DRX configuration information is configured to configure a DRX used on the direct communication interface when the relay terminal serves as a receiving terminal;
wherein the relay terminal is a relay terminal used when a remote terminal accesses the network device, and the direct communication interface is a direct communication interface between the remote terminal and the relay terminal.

46. The relay terminal according to claim 45, wherein the transceiver is further configured to perform:
receiving auxiliary information from the remote terminal via a PC5 interface RRC signaling;
sending the auxiliary information to the network device through a fifth end-to-end RRC signaling between the relay terminal and the network device;
wherein the auxiliary information is direct communication interface DRX configuration information expected by the remote terminal when the remote terminal serves as the receiving terminal.

47. The relay terminal according to claim 45, wherein the transceiver is further configured to perform:
sending the auxiliary information to the network device through a sixth end-to-end RRC signaling between the relay terminal and the network device;
wherein the auxiliary information is direct communication interface DRX configuration information expected by the relay terminal when the relay terminal serves as the receiving terminal.

48. The relay terminal according to claim 45, wherein the third DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

49. The relay terminal according to claim 45, wherein the fourth DRX configuration information comprises a DRX configuration of the direct communication interface between the remote terminal and the relay terminal for data transmission in an uplink transmission direction.

50. The relay terminal according to claim 45, wherein the transceiver is further configured to perform:
sending the third DRX configuration information to the relay terminal through a PC5 interface RRC signaling.

51. The relay terminal according to claim 46 or 47, wherein a granularity of the auxiliary information comprises at least one of the following:
a direct communication interface source address;
a direct communication interface target address; and
a cast type.

52. The relay terminal according to claim 46 or 47, wherein the auxiliary information comprises one or more pieces of configuration information, and the configuration information comprises at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

53. The relay terminal according to claim 45, wherein the transceiver is further configured to perform:
forwarding system information based on fifth DRX configuration information, wherein the fifth DRX configuration information is pre-configured; or
sending the system information via a direct communication interface broadcast message.

54. A relay terminal, comprising:
a second receiving module, configured to receive a fourth end-to-end RRC signaling sent by a network device, wherein the fourth end-to-end RRC signaling carries at least one of the following:
third DRX configuration information, wherein the third DRX configuration information is configured to configure a DRX used on a direct communication interface when the relay terminal serves as a transmitting terminal;
fourth DRX configuration information, wherein the fourth DRX configuration information is configured to configure a DRX used on the direct communication interface when the relay terminal serves as a receiving terminal;
wherein the relay terminal is a relay terminal used when a remote terminal accesses the network device, and the direct communication interface is a direct communication interface between the remote terminal and the relay terminal.

55. The relay terminal according to claim 54, wherein further comprising:
a fourth receiving module, configured to receive auxiliary information from the remote terminal via a PC5 interface RRC signaling;
a fifth sending module, configured to send the auxiliary information to the network device through a fifth end-to-end RRC signaling between the relay terminal and the network device;
wherein the auxiliary information is direct communication interface DRX configuration information expected by the remote terminal when the remote terminal serves as the receiving terminal.

56. The relay terminal according to claim 54, further comprising:
a sixth sending module, configured to send the auxiliary information to the network device through a sixth end-to-end RRC signaling between the relay terminal and the network device;
wherein the auxiliary information is direct communication interface DRX configuration information expected by the relay terminal when the relay terminal serves as the receiving terminal.

57. The relay terminal according to claim 54, wherein the third DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

58. The relay terminal according to claim 54, wherein the fourth DRX configuration information comprises a DRX configuration of the direct communication interface between the remote terminal and the relay terminal for data transmission in an uplink transmission direction.

59. The relay terminal according to claim 54, wherein further comprising:
a seventh sending module, configured to send the third DRX configuration information to the relay terminal through a PC5 interface RRC signaling.

60. The relay terminal according to claim 55 or 56, wherein a granularity of the auxiliary information comprises at least one of the following:
a direct communication interface source address;
a direct communication interface target address; and
a cast type.

61. The relay terminal according to claim 55 or 56, wherein the auxiliary information comprises one or more pieces of configuration information, and the configuration information comprises at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

62. The relay terminal according to claim 54, further comprising:
an eighth sending module, configured to:
forward system information based on fifth DRX configuration information, wherein the fifth DRX configuration information is pre-configured; or
send the system information via a direct communication interface broadcast message.

63. A network device, comprising: a memory, a transceiver, and a processor;
wherein the memory is configured to store program instructions; the transceiver is configured to transmit and receive data under a control of the processor; the processor is configured to read program instructions in the memory; and the transceiver is configured to perform:
sending a first end-to-end RRC signaling to a remote terminal; and/or,
sending a fourth end-to-end RRC signaling to a relay terminal;
wherein the first end-to-end RRC signaling carries at least one of the following:
first DRX configuration information, wherein the first DRX configuration information is configured to configure a DRX used on a direct communication interface when the remote terminal serves as a transmitting terminal;
second DRX configuration information, wherein the second DRX configuration information is configured to configure a DRX used on the direct communication interface when the remote terminal serves as a receiving terminal;
wherein the fourth end-to-end RRC signaling carries at least one of the following:
third DRX configuration information, wherein the third DRX configuration information is configured to configure a DRX used on the direct communication interface when the relay terminal serves as a transmitting terminal;
fourth DRX configuration information, wherein the fourth DRX configuration information is configured to configure the DRX used on the direct communication interface when the relay terminal serves as a receiving terminal; and
wherein the remote terminal accesses the network device through the relay terminal, and the direct communication interface is a direct communication interface between the remote terminal and the relay terminal.

64. The network device according to claim 63, wherein the transceiver is further configured to perform:
receiving auxiliary information which is sent by the remote terminal through a second end-to-end RRC signaling;
wherein the auxiliary information is sent after being obtained by the remote terminal from the relay terminal through a PC5 interface RRC signaling, and the auxiliary information is direct communication interface DRX configuration information expected by the relay terminal when the relay terminal serves as the receiving terminal.

65. The network device according to claim 63, wherein the transceiver is further configured to perform:
receiving the auxiliary information which is sent by the remote terminal through a third end-to-end RRC signaling;
wherein the auxiliary information is direct communication interface DRX configuration information expected by the remote terminal when the remote terminal serves as the receiving terminal.

66. The network device according to claim 64, wherein the transceiver is further configured to perform:
receiving the auxiliary information which is sent by the relay terminal through a fifth end-to-end RRC signaling;
wherein the auxiliary information is sent after being obtained by the relay terminal from the remote terminal through a PC5 interface RRC signaling, and the auxiliary information is the direct communication interface DRX configuration information expected by the remote terminal when the remote terminal serves as a receiving terminal.

67. The network device according to claim 64, wherein the transceiver is further configured to perform:
receiving the auxiliary information which is sent by the relay terminal through a sixth end-to-end RRC signaling;
the auxiliary information is the direct communication interface DRX configuration information expected by the relay terminal when the relay terminal serves as a receiving terminal.

68. The network device according to claim 63, wherein the first DRX configuration information comprises a DRX configuration of the direct communication interface between the remote terminal and the relay terminal for data transmission in an uplink transmission direction.

69. The network device according to claim 63, wherein the second DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

70. The network device according to claim 63, wherein the third DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

71. The network device according to claim 63, wherein the fourth DRX configuration information comprises a DRX configuration of the direct communication interface between the remote terminal and the relay terminal for data transmission in an uplink transmission direction.

72. The network device according to any one of claims 64 to 67, wherein a granularity of the auxiliary information comprises at least one of the following:
a direct communication interface source address;
a direct communication interface target address; and
a cast type.

73. The network device according to any one of claims 64 to 67, wherein the auxiliary information comprises one or more pieces of configuration information, and the configuration information comprises at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

74. A network device, comprising:
a first sending module, configured to a send a first end-to-end RRC signaling to a remote terminal; and/or, sending a fourth end-to-end RRC signaling to a relay terminal;
wherein the first end-to-end RRC signaling carries at least one of the following:
first DRX configuration information, wherein the first DRX configuration information is configured to configure a DRX used on a direct communication interface when the remote terminal serves as a transmitting terminal;
second DRX configuration information, wherein the second DRX configuration information is configured to configure a DRX used on the direct communication interface when the remote terminal serves as a receiving terminal;
wherein the fourth end-to-end RRC signaling carries at least one of the following:
third DRX configuration information, wherein the third DRX configuration information is configured to configure a DRX used on the direct communication interface when the relay terminal serves as a transmitting terminal;
fourth DRX configuration information, wherein the fourth DRX configuration information is configured to configure the DRX used on the direct communication interface when the relay terminal serves as a receiving terminal; and
wherein the remote terminal accesses the network device through the relay terminal, and the direct communication interface is a direct communication interface between the remote terminal and the relay terminal.

75. The network device according to claim 74, further comprising:
a fifth receiving module, configured to receive auxiliary information which is sent by the remote terminal through a second end-to-end RRC signaling;
wherein the auxiliary information is sent after being obtained by the remote terminal from the relay terminal through a PC5 interface RRC signaling, and the auxiliary information is direct communication interface DRX configuration information expected by the relay terminal when the relay terminal serves as the receiving terminal.

76. The network device according to claim 74, further comprising:
a sixth receiving module, configured to receive the auxiliary information which is sent by the remote terminal through a third end-to-end RRC signaling;
wherein the auxiliary information is direct communication interface DRX configuration information expected by the remote terminal when the remote terminal serves as the receiving terminal.

77. The network device according to claim 75, further comprising:
a seventh receiving module, configured to receive the auxiliary information which is sent by the relay terminal through a fifth end-to-end RRC signaling;
wherein the auxiliary information is sent after being obtained by the relay terminal from the remote terminal through a PC5 interface RRC signaling, and the auxiliary information is the direct communication interface DRX configuration information expected by the remote terminal when the remote terminal serves as a receiving terminal.

78. The network device according to claim 75, further comprising:
an eighth receiving module, configured to receive the auxiliary information which is sent by the relay terminal through a sixth end-to-end RRC signaling;
the auxiliary information is the direct communication interface DRX configuration information expected by the relay terminal when the relay terminal serves as a receiving terminal.

79. The network device according to claim 74, wherein the first DRX configuration information comprises a DRX configuration of the direct communication interface between the remote terminal and the relay terminal for data transmission in an uplink transmission direction.

80. The network device according to claim 74, wherein the second DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

81. The network device according to claim 74, wherein the third DRX configuration information comprises at least one of the following:
a DRX configuration of the direct communication interface between the relay terminal and the remote terminal for data transmission in a downlink transmission direction;
a direct communication link DRX configuration used by the relay terminal when the relay terminal forwards a paging message to the remote terminal in a downlink transmission direction; and
a direct communication link DRX configuration used by the relay terminal when the relay terminal forwards system information to the remote terminal.

82. The network device according to claim 74, wherein the fourth DRX configuration information comprises a DRX configuration of the direct communication interface between the remote terminal and the relay terminal for data transmission in an uplink transmission direction.

83. The network device according to any one of claims 75 to 78, wherein a granularity of the auxiliary information comprises at least one of the following:
a direct communication interface source address;
a direct communication interface target address; and
a cast type.

84. The network device according to any one of claims 75 to 78, wherein the auxiliary information comprises one or more pieces of configuration information, and the configuration information comprises at least one of the following:
a length of onDuration Timer;
a discontinuous reception or transmission cycle;
a discontinuous reception or transmission offset;
an inactivity timer length;
a HARQ round trip time timer length;
a HARQ retransmission timer length.

85. A processor-readable storage medium, storing a computer program, wherein the computer program is configured to cause the processor to execute the method for configuring discontinuous reception of a direct communication interface in a relay scenario according to any one of claims 1 to 8, or the method for configuring discontinuous reception of a direct communication interface in a relay scenario according to any one of claims 9 to 17, or the method for configuring discontinuous reception of a direct communication interface in a relay scenario according to any one of claims 18 to 28.
